(19) Europäisches Patentamt
European Patent Office
Office européen des brevets

(11) EP 2 413 517 A1

(12) EUROPEAN PATENT APPLICATION
published in accordance with Art. 153(4) EPC

(43) Date of publication:
01.02.2012 Bulletin 2012/05

(51) Int Cl.:
H04B 7/15 (2006.01)     H04B 7/04 (2006.01)
H04J 99/00 (2009.01)    H04W 16/26 (2009.01)
H04W 16/28 (2009.01)

(21) Application number: 10755900.7

(22) Date of filing: 15.03.2010

(86) International application number:
PCT/JP2010/054303

(87) International publication number:
WO 2010/110102 (30.09.2010 Gazette 2010/39)

(84) Designated Contracting States:
AT BE BG CH CY CZ DE DK EE ES FI FR GB GR
HR HU IE IS IT LI LT LU LV MC MK MT NL NO PL
PT RO SE SI SK SM TR

(30) Priority: 27.03.2009  JP 2009078470
20.10.2009  JP 2009241048

(71) Applicant: Sharp Kabushiki Kaisha
Osaka-shi, Osaka 545-8522 (JP)

(72) Inventors:
• TO, Shimpei
Osaka 545-8522 (JP)
• SLOCK, Dirk
Osaka 545-8522 (JP)

(74) Representative: Müller - Hoffmann & Partner
Patentanwälte
Innere Wiener Strasse 17
81667 München (DE)

(54) **WIRELESS COMMUNICATION SYSTEM, BASE STATION, RELAY STATION, AND TERMINAL**

(57) In a radio communication system performing bidirectional communication between a base station having plural transmitting and receiving antennas and plural terminals using the same frequency via a relay station having plural transmitting and receiving antennas, the base station and terminals transmit signals to the relay station simultaneously in a first time frame, the relay station which receives the transmitted signals in the first time frame transmits signals generated by multiplying the received signals by a relay station transmission weight, to the base station and the plural terminals in a second time frame. With this, it is possible to provide a communication system and the like, which can realize MU-MIMO bidirectional communication between a base station including plural antennas and plural terminals, with a lower amount resources when the communication is performed via a relay station.

FIG. 1

**Description**

Technical Field

The present invention relates to a radio communication system and the like in which a base station and terminals perform bidirectional communication using the same frequency, via a relay station including plural transmitting and receiving antennas.

Background Art

In order to solve the stringency of frequency resources with recent increase in data traffic, new radio frequencies are allotted for mobile communication, and construction of new mobile communication systems (for example, IMT-Advanced system) that use newly allocated radio frequency ranges has been progressed. For such a new mobile communication system, a higher frequency band than those allotted to the conventional systems is allotted as the frequency band. However, the higher the frequency of the signal is, the more the signal attenuates, and the coverage becomes narrower than the conventional systems. As a means for solving this problem, there is method of providing a relay station that relays communication between the base station and terminals within a cell.

Examples of the relay stations may include one that merely amplifies the received signal and transmits the amplified signal (Amplify-and Forward: AF type), one that once demodulates and decodes the received signal and re-demodulates and transmits the signal if the signal is free from error (Decode-and-Forward: DF type), and others. When the base station and terminals that are located away from the base station (terminals located at the cell-edge boarder), communicate via the relay station, it is possible for the relay station to keep up the cell coverage that is equivalent to that of the conventional system, without degrading reception performance of those terminals.

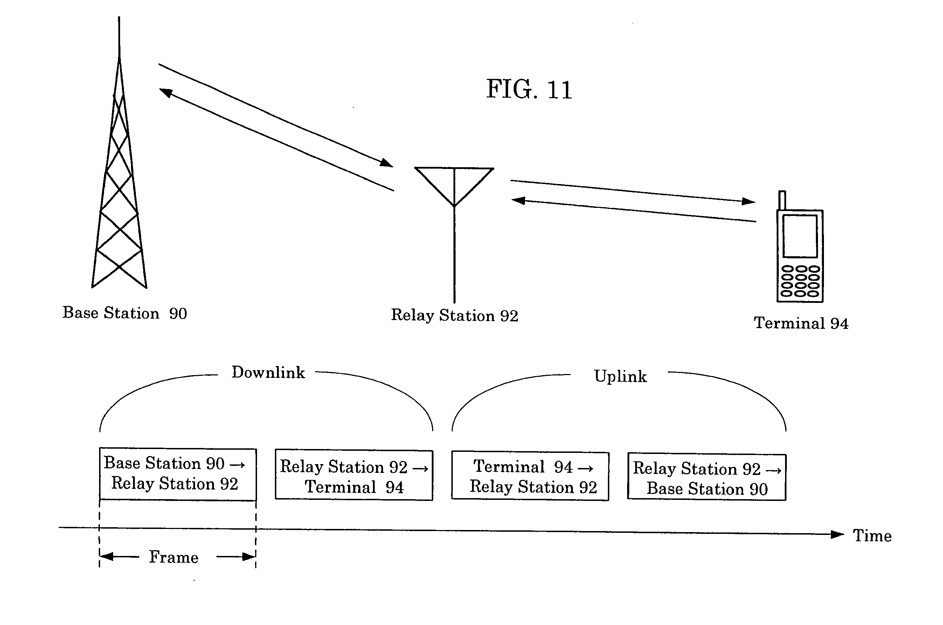

FIG. 11 shows an example of a radio communication system including such a relay station. As shown in FIG. 11, a base station 90 and a terminal 94 are connected via a relay station 92. Here, upon transmission of a signal from base station 90 to terminal 94, two frames are required to transmit the signal corresponding to one frame when the signal is relayed via relay station 92.

Similarly, upon transmission of a signal from terminal 94 to base station 90, two frames are required to transmit the signal corresponding to one frame when the signal is relayed via relay station 92. Accordingly, when signals are exchanged between base station 90 and terminal 94 using the same frequency, time resource for four frames are required. This causes the problem of lowering transmission efficiency.

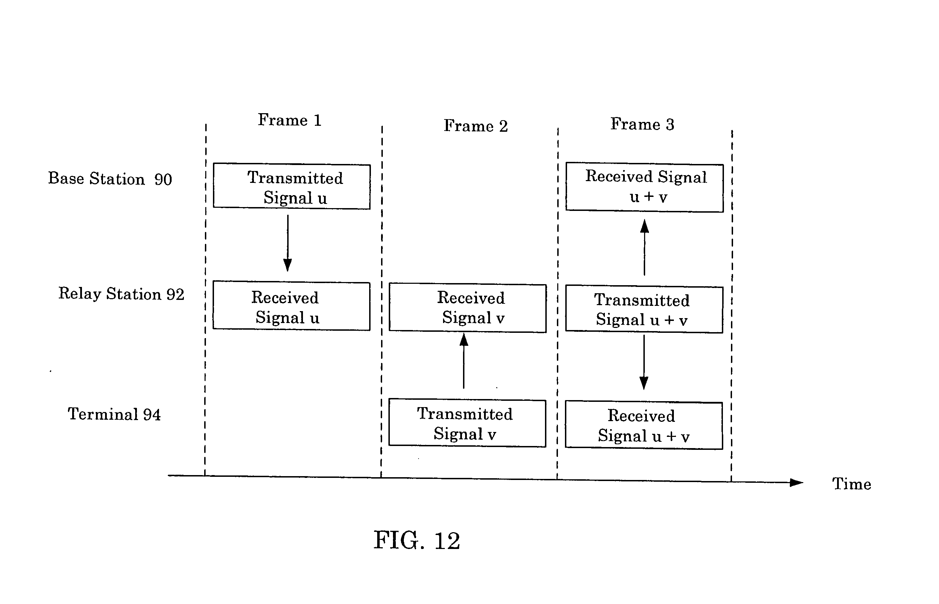

As the measures against this problem, a bidirectional communication method called Two-way relaying or Bi-direction relaying has been proposed. In this method, for example, base station 90 transmits a signal to relay station 92 first and then the terminal transmits a signal to the relay station in the next frame, as shown in FIG. 12. Here, for description simplicity, the channel variation affecting each signal is omitted.

Relay station 92 combines the signals received in the different frames and broadcasts the combined signal in the third frame to base station 90 and terminal 94. In this third frame, base station 90 and terminal 94 each receive the mixture of the two signals. So it is usually impossible to reproduce the original data.

However, in this case, since base station 90 and terminal 94 grasp respective own transmitted signals, it is possible to detect the signal transmitted from the opposite side by subtracting the own transmitted signal from the received signal. As a result, it is possible to realize bidirectional communication via relay station 92, which usually requires four frames, by three frames, hence improves efficiency of frequency use.

Further, though FIG. 12 shows a configuration in which base station 90 and terminal 94 transmit to relay station 92 using different frames, it is possible to provide a configuration in which base station 90 and terminal 94 perform transmission to relay station 92 at the same time. It is possible in this case to realize bidirectional communication via relay station 92 by two frames.

Moreover, though description herein was made referring to an AF type configuration in which no decoding of received signals is performed at relay station 92, it is possible to provide a configuration in which, when each signal can be decoded at relay station 92 (when base station 90 and terminal 94 transmit signals using different frames, when relay station 92 has a plurality of receiving antennas though base station 90 and terminal 94 transmit signal simultaneously, or in other cases) the signals are once decoded at relay station 92, and the two decoded sets of data are synthesized and broadcast to the base station and the terminal. In this case, a technique is used in which the signal obtained by taking the exclusive disjunction of two sets of data transmitted from base station 90 and terminal 94 is modulated and broadcast to each of these.

Use of this method makes it possible to cut down the required time resource even when communication is performed via relay station 92, hence it is possible to realize efficient bidirectional communication.

A technique for applying this Two-way relaying (Bi-directional relaying) to MIMO (Multiple-Input Multiple -Output) communication is demonstrated in non-patent document 1.

Discussed in non-patent document 1 is a case where the base station, relay station and terminal each have two antennas so that two streams of data (different data from each antenna) are transmitted from the base station and terminal. In this case, non-patent document 1 discloses a configuration (FIG. 13) in which when the relay station transmits a signal toward the base station and terminal, the signal is multiplied with a transmission weight, and the base station and terminal that receive this signal multiplies a reception weight on the signal after subtraction of the known interference (the own transmitted signal).

In MIMO communication between the base station and one terminal, the base station and terminal each grasp two transmitted signals of their own ($u_1$ and $u_2$ for the base station and $v_1$ and $v_2$ for the terminal) so as to be able to subtract signals obtained by multiplying these signals by a channel variation or the like, from the received signals. Further, the signal obtained after subtraction of theself-interference (the known interference transmitted by itself) from the received signal is the sum of the two desired signals ($v_1$ and $v_2$ for the base station and $u_1$ and $u_2$ for the terminal) and noise, hence can be processed in the same manner as in normal MIMO (here, signal separation by multiplying a reception weight. Multiplication of the transmission and reception weights as this makes it possible to perform signal detection at the base station and terminal with a favorable performance, hence realize efficient bidirectional communication.

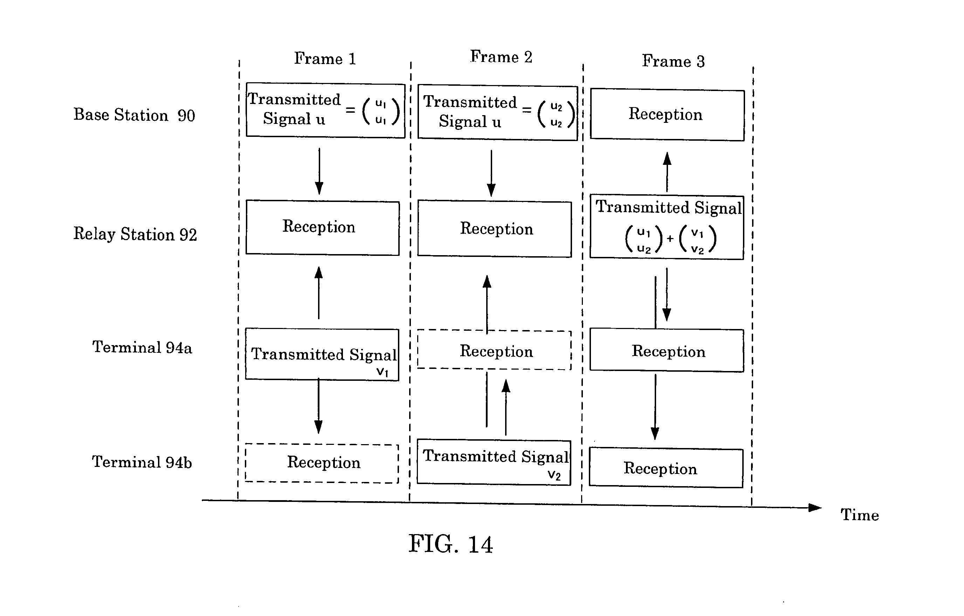

Non-patent document 2 demonstrates a technique for applying Two-way relaying (Bi-directional relaying) to multi-user MIMO (Multi-User-MIMO: MU-MIMO) communication in which a base station performs communication with plural terminals at the same time. Discussed in this non-patent document 2 is bidirectional communication using three units of time resources (frames) when the base station and relay station each have two antennas while two terminals each having one antenna exist (FIG. 14).

As shown in FIG. 14, at the same time that the signal addressed from the base station to terminal A is transmitted to the relay station, the signal addressed from terminal A to the base station is transmitted to the relay station in the first frame. At this time, the signal transmitted from terminal A to the relay station is also received and demodulated at terminal B so that this demodulated signal will be used afterwards as the known interference signal.

Next, in the second frame, at the same time that the signal addressed from the base station to terminal B is transmitted to the relay station, the signal addressed from terminal B to the base station is transmitted to the relay station. At this time, the signal transmitted from terminal B to the relay station is also received and demodulated at terminal A so that this demodulated signal will be used afterwards as the known interference signal.

Finally, in the third frame, the relay station demodulates, decodes and modulates once again the signals received from the base station and the two terminals and combines them into a signal, which is broadcasted to the base station and two terminals. The base station and two terminals having received this signal need to subtract signals forming interference in order to detect respective necessary signals. Since the base station grasps its own signals transmitted to the two terminals, it is possible to perform this subtraction to thereby extract the desired signal.

Also, in the two terminals, each grasps the own transmitted signal and has received the signal transmitted by the other terminal so that it is possible to subtract this as the interference signal. In performing MU-MIMO communication, each terminal usually grasps its own transmitted signal only, so that the terminal cannot subtract interference correctly, resulting in difficulty in realizing bidirectional communication. However, as in non-patent document 2, the signal transmitted from one terminal is intentionally received and demodulated by the other, whereby it is possible for each terminal to grasp the signal transmitted from the other as the known interference and use it for subtraction.

Prior Art Documents

Non-patent Documents

Non-patent Document 1: N. Lee et al, "Linear Precoder and Decoder Design for Two-Way AF MIMO Relaying System, "VTC Spring 2008, May 2008.
Non-patent Document 2: L. Weng et al, "MU-MIMO Relaying System with Self-interference Cancellation" WCNC 2007, Mar. 2007.

Summary of the Invention

Problems to be Solved by the Invention

In MU-MIMO environment, the own transmitted signal, the signal transmitted by the other terminal and the signal transmitted to the other terminal by the base station are combined as interference with the desired signal. However, each terminal knows its own transmitted signal only, so that it is impossible to appropriately subtract the inference (the signal transmitted by the other terminal and the signal transmitted to the other terminal by the base station), hence it is impossible to realize bidirectional communication using the transmission and reception weights as shown in non-patent document 1.

On the other hand, use of the technique shown in non-patent document 2 enables each terminal to grasp the interference signal to be subtracted (the signal transmitted by the other terminal) under MU-MIMO environment, but the terminal needs to perform a process of receiving and demodulating the signal that is transmitted from the other terminal to the relay station during the signal is being transmitted, hence it is difficult to realize when the terminals are located distant from each other. Further, this process is not preferable in view of power consumption at the terminal and from a privacy viewpoint for the transmitted data of the terminals. Moreover, the technique described in non-patent document 2 needs three units of time resources, so that it is desired to realize a highly efficient system for which the required resources are further cut down.

In view of the problems described above, the object of the present invention is to provide a communication system and the like, which realize MU-MIMO bidirectional communication between a base station having plural antennas and plural terminals efficiently with a lower amount of resources when the communication is performed via a relay station.

Means for Solving the Problems

In view of the above problems, the radio communication system according to the present invention is a radio communication system performing bidirectional communication between a base station including a plurality of transmitting and receiving antennas and a plurality of terminals using a same frequency via a relay station having a plurality of transmitting and receiving antennas, and is **characterized in that** the base station and plural terminals transmit signals to the relay station simultaneously in a first time frame, the relay station includes: a receiving means for receiving the signals transmitted in the first time frame as received signals; and, a transmitting means for generating a transmitted signal by multiplying the received signals by a relay station transmission weight $W_{RS}$ and transmitting the transmitted signal to the base station and plural terminals in a second time frame.

The radio communication system of the present embodiment is **characterized in that** the relay station transmission weight $W_{RS}$ is generated at least based on a channel between the relay station and terminals.

The radio communication system of the present embodiment is **characterized in that** the signal transmitted from the base station in the first time frame is a signal that is produced by multiplying a modulated signal by a base station transmission weight $W_{TX}$.

The radio communication system of the present embodiment is **characterized in that** the base station transmission weight $W_{TX}$ is generated at least based on a channel between the base station and the relay station, or the channel between the relay station and terminals.

The radio communication system of the present embodiment is **characterized in that** the relay station transmission weight $W_{RS}$ and the base station transmission weight $W_{TX}$ are generated so as to have the transmitted streams from the base station all separated and received by individual terminals.

The radio communication system of the present embodiment is **characterized in that** each terminal having received the signal transmitted from the relay station in the second time frame, generates an interference signal based on the signal that the terminal transmitted in the first time frame and subtracts the generated interference signal from the received signal to detect the signal transmitted from the base station in the first frame.

The radio communication system of the present embodiment is **characterized in that** the base station having received the signal transmitted from the relay station in the second time frame, generates an interference signal based on the signal that the base station transmits in the first time frame and subtracts the generated interference signal from the received signal and multiplies the signal after subtraction of the interference signal by a reception weight $W_{RX}$ to detect the signal transmitted from the terminal.

The radio communication system of the present embodiment is **characterized in that** the reception weight $W_{RX}$ is generated at least based on the channel between the base station and the relay station, or the channel between the relay station and the terminals.

The radio communication system of the present embodiment is **characterized in that** the relay station transmission weight $W_{RS}$, the base station transmission weight $W_{TX}$ and the reception weight $W_{RX}$ are represented by equations (3), (5), (6), (8) and (9), where H is the channel matrix between the base station and the relay station, G is the channel matrix between the relay station and the plural terminals, $P_{BS}$ is the total transmission power of the base station, $P_{RS}$ is the total transmission power of the relay station, $P_{MS}$ is the sum of transmission powers of the terminals, the covariance matrix of the transmitted signal from base station before multiplication of the first transmission weight $W_{TX}$ is the unit matrix, M is the total number of antennas of the terminals, the square of $\sigma_{RS}$ is the noise power at the relay station.

The radio communication system of the present embodiment is **characterized in that** the relay station transmission weight $W_{RS}$, the base station transmission weight $W_{TX}$ and the reception weight $W_{RX}$ are represented by equations (23) to (29), where H is the channel matrix between the base station and the relay station, G is the channel matrix between the relay station and the plural terminals, $P_{BS}$ is the total transmission power of the base station, $P_{RS}$ is the total transmission power of the relay station, $P_{MS}$ is the sum of transmission powers of the terminals, $Q_u$ is the

covariance matrix of the transmitted signal from the base station before multiplication of the base station transmission weight $W_{TX}$, $Q_v$ is the covariance matrix of the transmitted signal of base station, M is the total number of antennas of the terminals, the square of $\sigma_{BS}$ is the noise power at the base station, the square of $\sigma_{RS}$ is the noise power at the relay station and, the square of $\sigma_{MS}$ is the noise power of the terminals.

The radio communication system of the present embodiment is **characterized in that** all the plural terminals have the same number of antennas.

The radio communication system of the present embodiment is **characterized in that** the plural terminals have a plurality of antennas.

The radio communication base station of the present invention is a base station having a plurality of transmitting and receiving antennas and performing bidirectional communication with a plurality of terminals using the same frequency via a relay station having a plurality of transmitting and receiving antennas, and includes: a transmitting means for transmitting a signal addressed to the plural terminals toward the relay station in a first time frame; and a receiving means for receiving the signal transmitted from the relay station in a second time frame.

The base station of the present invention is **characterized in that** the transmitting means transmits a signal that is produced by multiplying a modulated signal by a base station transmission weight $W_{TX}$.

The base station of the present invention is **characterized in that** the base station transmission weight $W_{TX}$ is generated at least based on a channel between the base station and the relay station, or a channel between the relay station and the terminals.

The base station of the present invention is **characterized in that** the base station transmission weight $W_{TX}$ is generated so that the transmitted streams from the base station are all separated and received by individual terminals.

The base station of the present invention further includes: an interference signal generating means for generating an interference signal based on the signal that the base station itself transmits in the first time frame; and, an interference subtracting means for subtracting the generated interference signal from the signal received by the receiving means in the second time frame.

The base station of the present invention further includes: a reception weight multiplying means for multiplying the signal after subtraction of the interference signal by the interference subtracting means by a reception weight $W_{RX}$; and, a means for detecting the transmitted signal from the terminals after multiplication of the reception weight $W_{RX}$.

The base station of the present invention is **characterized in that** the reception weight $W_{RX}$ is generated at least based on the channel between the base station and the relay station, or the channel between the relay station and the terminals.

The relay station of the present invention is a relay station relaying bidirectional communication between a base station having a plurality of transmitting and receiving antennas and a plurality of terminals using a same frequency, and includes: a receiving means for receiving the signals transmitted from the base station and the terminals in the first time frame as received signals; and, a transmitting means that transmitting a signal generated by multiplying the received signals in the first time frame by a relay station transmission weight $W_{RS}$ as the transmitted signals in a second time frame.

The relay station is **characterized in that** the relay station transmission weight $W_{RS}$ is generated at least based on the channel between the relay station and the terminals.

The relay station is **characterized in that** the relay station transmission weight $W_{RS}$ is generated in such a manner that the transmitted streams from the base station are all separated and received by individual terminals.

The terminal of the present invention is a terminal performing bidirectional communication with a base station having a plurality of transmitting and receiving antennas, via a relay station having a plurality of transmitting and receiving antennas using a same frequency as that of the base station and other terminals, and includes: a transmitting means for transmitting a signal addressed to the base station toward the relay station in a first time frame; and a receiving means for receiving the signal transmitted from the relay station in a second time frame.

The terminal of the present invention further includes: an interference signal generating means for generating an interference signal based on the signal that the terminal itself transmits in the first time frame; and an interference subtracting means for subtracting the generated interference signal from the received signal in the second time frame.

Effect of the Invention

Use of the present invention makes it possible to realize MU-MIMO bidirectional communication between a base station having plural antennas and terminals, efficiently with a lower amount of resources (the number of frames: 2) when the communication is performed via a relay station. Specifically, it is possible to perform such control that each terminal can avoid receiving the signal involving unknown interference, by multiplying the transmitted signals by associated weights suitable for bidirectional communication under MU-MIMO environment. This weight multiplying control enables each terminal to receive the combined signal consisting of the desired signal and the known interference only, so that it is possible to efficiently detect the desired signal by subtracting the known interference. Further, also on the base station side, it is possible to subtract the known interference signal and obtain good reception performance by multiplying a reception weight.

Brief Description of Drawings

[FIG. 1] is a diagram for illustrating the outline of a radio communication system in the first embodiment.
[FIG. 2] is a diagram for illustrating the outline of a radio communication system in the first embodiment.
[FIG. 3] is a diagram for illustrating the configuration of a base station in the first embodiment.
[FIG. 4] is a diagram for illustrating the configuration of a relay station in the first embodiment.
[FIG. 5] is a diagram for illustrating the configuration of a terminal in the first embodiment.
[FIG. 6] is a diagram for illustrating the operation in the third embodiment.
[FIG. 7] is a diagram for illustrating the configuration of a base station in the third embodiment.
[FIG. 8] is a diagram for illustrating the configuration of a relay station in the third embodiment.
[FIG. 9] is a diagram for illustrating the configuration of a terminal in the third embodiment.
[FIG. 10] is a diagram for illustrating the operation in the fifth embodiment.
[FIG. 11] is a diagram for illustrating the operation of a conventional radio communication system.
[FIG. 12] is a diagram for illustrating the operation of a conventional radio communication system.

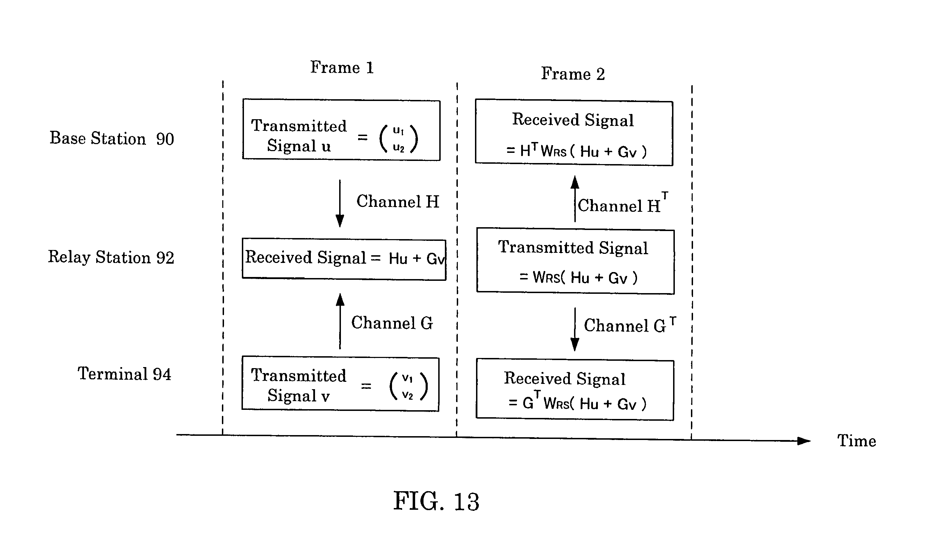

[FIG. 13] is a diagram for illustrating the operation of a conventional radio communication system.
[FIG. 14] is a diagram for illustrating the operation of a conventional radio communication system.

Modes for Carrying Out the Invention

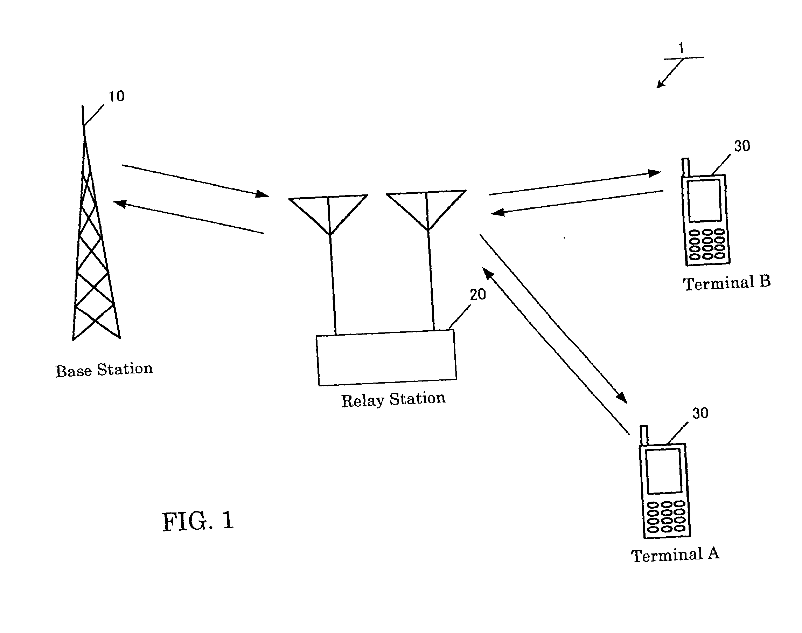

Subsequently, a radio communication system 1 to which the present invention is applied will be described. FIG. 1 is a diagram for illustrating the outline of a radio communication system 1. As shown in FIG. 1, in radio communication system 1, terminals 30 (terminal A and terminal B) are connected to a base station 10 via a relay station 20.

Now, the outline of radio communication system 1 to which the present invention is applied will be described. That is, the present invention relates to a method of realizing MU-MIMO bidirectional communication between a base station having a plurality of antennas and plural terminals by way of a relay station, in an efficient manner with a lower amount of resources.

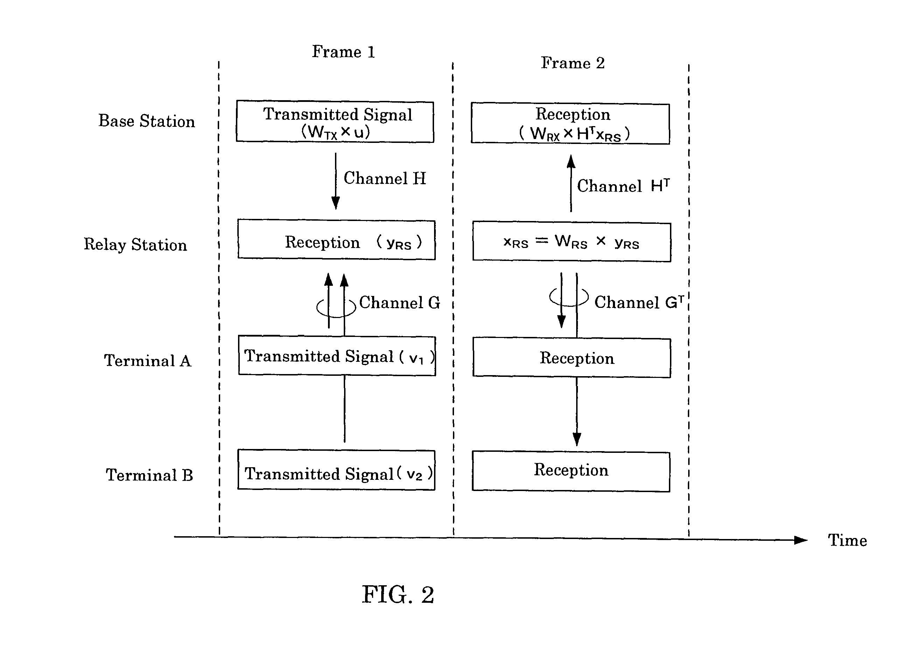

Specifically, as shown in FIG. 2, base station 10 and terminals 30 (terminals A and B) each transmit a signal to relay station 20 in the first time frame. Then, in the second time frame, relay station 20 broadcasts a signal to base station 10 and two terminals 30. Upon this, each of base station 10 and relay station 20 multiply the signal to be transmitted by a corresponding weight ($W_{TX}$, $W_{RS}$) suitable for bidirectional communication under the MU-MIMO environment so as to perform control such that each terminal can avoid receiving any signal mixed with unknown interference. With this weight multiplying control, it is possible for each terminal to receive a combined signal consisting of the desired signal and the known interference only, hence detect the desired signal efficiently by subtracting the known interference.

That is, $u_1$ is obtained in terminal A by interference subtraction while $u_2$ is obtained in terminal B by interference subtraction. Further, when if the terminals are equipped with a plurality of antennas, it is possible to implement maximum likelihood detection on the signal after subtraction of the known interference. Then, it is also possible to exchange signals multiplied by a weight.

Further it is possible to subtract the known interference signal also on the base station side, and besides it is possible to detect the signals transmitted from the terminals, by multiplying a reception weight ($W_{RX}$). That is, in frame 2, when the signal after subtraction of the interference subtracted is multiplied by $W_{RX}$, $v_1$ and $v_2$ will be obtained at base station 10. It is also possible in base station 10 to implement maximum likelihood detection on the signal after subtraction of the known interference and obtain good reception performance.

By applying the present invention as above, it is possible to efficiently realize MU-MIMO Two-way relaying with a lower amount of time resources (the number of frames: 2) even when the relay station does not have as many antennas as that required for decoding the signals (the signals transmitted from the base station and terminals) received in frame 1.

[The First Embodiment]

Then, the first embodiment to which the present invention is applied will be described. The first embodiment shows a case of MU-MIMO Two-way relaying where use is made of transmission and reception weights that make compensation so as to restore the received signal to its original state (to the signal corresponding to the transmitted signal) based on the concept of ZF (Zero Forcing).

To begin with, the mathematical representation of three weights $W_{TX}$, $W_{RS}$ and $W_{RX}$ shown in FIG. 2 will be given hereinbelow. Here, base station 10 and relay station 20 each have two antennas while two terminals 30 each have one antenna. In FIG. 2, the matrix that represents the channel variation affecting the signal that is being transmitted from base station 10 to relay station 20 is assumed as H, and the reverse (from relay station 20 to base station 10) is assumed as $H^T$, the transpose of H. Further, the matrix that represents the channel variation affecting the signal that is being transmitted from terminals 30 (Terminal A and terminal B) to relay station 20 is assumed as G, and the reverse (from relay station 20 to terminals 30) is assumed as $G^T$, the transpose of G.

Detailedly describing, the channel variation affecting the signal that is being transmitted from antenna 1 of base station 10 to antenna 1 of relay station 20 is $h_{11}$, the channel variation from antenna 1 of base station 10 to antenna 2 of relay station 20 is $h_{21}$, the channel variation from antenna 2 of base station 10 to antenna 1 of relay station 20 is $h_{12}$ and the channel variation from antenna 2 of base station 10 to antenna 2 of relay station 20 is $h_{22}$.

Further, the channel variation affecting the signal that is being transmitted from the antenna of terminal A to antenna 1 of relay station 20 is $g_{11}$, the channel variation from the antenna of terminal A to antenna 2 of relay station 20 is $g_{12}$, the channel variation from the antenna of terminal B to antenna 1 of relay station 20 is $g_{12}$ and the channel variation from the antenna of terminal B to antenna 2 of relay station 20 is $g_{22}$. These channel variations can be given as the following expression, and base station 10 and relay station 20 are assumed to grasp these matrixes beforehand.

[Math 1]

$$\mathbf{H} = \begin{pmatrix} h_{11} & h_{12} \\ h_{21} & h_{22} \end{pmatrix} \qquad (1)$$

[Math 2]

$$\mathbf{G} = \begin{pmatrix} g_{11} & g_{12} \\ g_{21} & g_{22} \end{pmatrix} \qquad (2)$$

In this way, when the channel variations between base station 10 and relay station 20 and between terminals 30 and relay station 20 are given by matrixes such as H and G, the weights ($W_{TX}$, $W_{RS}$ and $W_{RX}$) suitable for the MU-MIMO Two-way relaying of the present invention are given as follows:

[Math 3]

$$\mathbf{W}_{TX} = \alpha \mathbf{H}^{-1} \mathbf{G} \qquad (3)$$

Here, $\alpha$ is a coefficient that normalizes the transmission power of the base station and is represented by the following equation.

[Math 4]

$$\alpha = \sqrt{P_{BS} \Big/ \mathrm{tr}\Big\{\big(\mathbf{H}^{-1}\mathbf{G}\big)\mathbf{Q}_u\big(\mathbf{H}^{-1}\mathbf{G}\big)^H\Big\}} \qquad (4)$$

Here, $P_{BS}$ represents the total transmission power of the base station, $Q_u$ the covariance matrix of the signal (before multiplication of $W_{TX}$) transmitted from the base station and tr(X) represents the trace (the sum of the diagonal components) of matrix X. Further, when it is assumed that the powers of the two signals (before multiplication of $W_{TX}$) transmitted from the base station are equal. When given as $Q_u=(P_{BS}/M)I$, then $\alpha$ can be represented as follows.

[Math 5]

$$\alpha = \sqrt{M \Big/ \mathrm{tr}\Big\{\big(\mathbf{H}^{-1}\mathbf{G}\big)\big(\mathbf{H}^{-1}\mathbf{G}\big)^H\Big\}} \qquad (5)$$

Here, M represents the number of antennas (the number of terminals). In this case, M is "2". I is the unit matrix.

[Math 6]

$$\mathbf{W}_{RS} = \beta\big(\mathbf{G}^T\big)^{-1}\mathbf{G}^{-1} \qquad (6)$$

Further, $\beta$ is a coefficient that normalizes the transmission power of the relay station and is represented by the following expression. Here, $P_{RS}$ represents the total transmission power of the relay station, $Q_v$ the covariance matrix of the signal transmitted from the two terminals and the square of $\sigma_{RS}$ the power of noise at the relay station. G* represents the complex conjugate matrix of matrix G.

[Math 7]

$$\beta = \sqrt{P_{RS} \Big/ \mathrm{tr}\Big\{\alpha^2\big(G^T\big)^{-1}\mathbf{Q}_u\big(G^*\big)^{-1} + \big(G^T\big)^{-1}\mathbf{Q}_v\big(G^*\big)^{-1} + \sigma_{RS}^2\big(G^T\big)^{-1}\mathbf{G}^{-1}\big(G^H\big)^{-1}\big(G^*\big)^{-1}\Big\}}$$

$$(7)$$

Here, it is assumed that $Q_u=(P_{BS}/M)I$ and the powers of the two signals transmitted from the two terminals are equal to each other. When given as $Q_v=(P_{MS}/M)I$, then $\beta$ can be represented as follows. Here, $P_{MS}$ represents the total transmission power of the terminals (the sum of the transmission powers of the two terminals).

[Math 8]

$$\beta = \sqrt{P_{RS} \Big/ \mathrm{tr}\Big\{\alpha^2 (P_{RS}/M)(\mathbf{G}^T)^{-1}(\mathbf{G}^*)^{-1} + (P_{MS}/M)(\mathbf{G}^T)^{-1}(\mathbf{G}^*)^{-1} + \sigma_{RS}^2 (\mathbf{G}^T)^{-1}\mathbf{G}^{-1}(\mathbf{G}^H)^{-1}(\mathbf{G}^*)^{-1}\Big\}}$$

(8)

When the relay station weight shown in Eq. (6) is used, the reception weight at the base station is given as follows.

[Math 9]

$$\mathbf{W}_{RX} = \mathbf{G}^T (\mathbf{H}^T)^{-1} \qquad (9)$$

Shown as follows are the received signals at base station 10 and two terminals 30 when the transmission and reception weights given by the above Eqs. (3) to (9) are used. Here, the transmission signal addressed from base station 10 to terminal A is $u_1$, the transmission signal addressed from the base station to terminal B is $u_2$, the transmission signal addressed to terminal A is $v_1$ and the transmission signal addressed to terminal B is $v_2$. For description simplicity, the noise component is omitted.

[Math 10]

$$\mathbf{u} = \begin{pmatrix} u_1 \\ u_2 \end{pmatrix} \qquad (10)$$

[Math 11]

$$\mathbf{v} = \begin{pmatrix} v_1 \\ v_2 \end{pmatrix} \qquad (11)$$

First, the signal $y_{RS}$ that the relay station receives in the first frame of FIG. 2 is represented as follows.

[Math 12]

$$\mathbf{y}_{RS} = \mathbf{H}\mathbf{W}_{TX}\mathbf{u} + \mathbf{G}\mathbf{v} \qquad (12)$$

Then, the signal $X_{RS}$ that the relay station transmits in the second frame is represented as follows.

[Math 13]

$$\mathbf{x}_{RS} = \mathbf{W}_{RS}\left(\mathbf{H}\mathbf{W}_{TX}\mathbf{u} + \mathbf{G}\mathbf{v}\right) \qquad (1\,3)$$

The signal given by this Eq. (13) passes through the channel and is received at the terminals as follows.

[Math 14]

$$\begin{aligned}
\mathbf{y}_{MS} &= \mathbf{G}^{T}\mathbf{W}_{RS}\left(\mathbf{H}\mathbf{W}_{TX}\mathbf{u} + \mathbf{G}\mathbf{v}\right) \\
&= \mathbf{G}^{T}\beta\left(\mathbf{G}^{T}\right)^{-1}\mathbf{G}^{-1}\left(\mathbf{H}\alpha\mathbf{H}^{-1}\mathbf{G}\mathbf{u} + \mathbf{G}\mathbf{v}\right) \\
&= \alpha\beta\mathbf{u} + \beta\mathbf{v} \qquad\qquad (1\,4) \\
&= \begin{pmatrix} \alpha\beta u_{1} + \beta v_{1} \\ \alpha\beta u_{2} + \beta v_{2} \end{pmatrix}
\end{aligned}$$

As understood from this Eq. (14), when the weights of the present invention are used, terminal A receives the combined signal of the desired signal $u_1$ and the known interference signal $v_1$ that was transmitted by itself without mixture of an unknown interference signal. Accordingly, it is possible to extract the desired signal $u_1$ by subtracting the known interference signal $v_1$ multiplied by transmission power normalizing coefficient $\beta$, from the received signal.

Similarly, since terminal B also receives the combined signal of the desired signal $u_2$ and the known interference signal $v_2$ that was transmitted by itself, in which no unknown interference signal is mixed, it is possible to extract the desired signal $u_2$ by subtracting the known interference signal $v_2$ multiplied by transmission power normalizing coefficient $\beta$, from the received signal. Here, the transmission power normalizing coefficient $\beta$ needs to be notified from relay station 20 to each terminal 30.

In the above way, the transmission signal is multiplied at the base station, with the transmission weight represented by Eq. (3), and the transmission signal is multiplied at relay station 20, with the weight represented by Eq. (6), whereby it is possible to perform control such that each terminal can avoid receiving any signal involving unknown interference. That is, each terminal 30 can receive the combined signal consisting of the desired signal and the known interference only, hence it is possible to detect the desired signal by subtracting the known interference.

Further, the signal represented by Eq. (11) is received at the base station as the signal $y_{BS}$ as follows.

[Math 15]

$$\begin{aligned}
\mathbf{y}_{BS} &= \mathbf{H}^{T}\mathbf{W}_{RS}\left(\mathbf{H}\mathbf{W}_{TX}\mathbf{u} + \mathbf{G}\mathbf{v}\right) \\
&= \mathbf{H}^{T}\beta\left(\mathbf{G}^{T}\right)^{-1}\mathbf{G}^{-1}\left(\mathbf{H}\alpha\mathbf{H}^{-1}\mathbf{G}\mathbf{u} + \mathbf{G}\mathbf{v}\right) \qquad (1\,5) \\
&= \mathbf{H}^{T}\left(\mathbf{G}^{T}\right)^{-1}\left(\alpha\beta\mathbf{u} + \beta\mathbf{v}\right)
\end{aligned}$$

In the base station, both $u_1$ and $u_2$ are known so that it is possible to subtract them as the interference component from the received signal. From Eq.(15), the interference component is subtracted, the result is as follows.

[Math 16]

$$\hat{\mathbf{y}}_{BS} = \beta \mathbf{H}^T \left( \mathbf{G}^T \right)^{-1} \mathbf{v} \qquad (1\,6)$$

Multiplying this by the reception weight represented by Eq. (9) produces

[Math 17]

$$\begin{aligned}
\hat{\mathbf{y}}_{BS} &= \beta \mathbf{W}_{RX} \mathbf{H}^T \left( \mathbf{G}^T \right)^{-1} \mathbf{v} \\
&= \beta \mathbf{G}^T \left( \mathbf{H}^T \right)^{-1} \mathbf{H}^T \left( \mathbf{G}^T \right)^{-1} \mathbf{v} \qquad (1\,7) \\
&= \beta \mathbf{v}
\end{aligned}$$

Accordingly, it is possible to obtain the desired signal v. In this case, extraction of the desired signal is performed by subtracting the interference component from the received signal given by Eq. (15) first then multiplying the reception weight given by Eq. (9). However, it is also possible to extract the desired signal in the opposite order, or by multiplying a reception weight and then subtracting the interference component. The reception weight at this time may be the same as that given by Eq. (9).

As described above, by multiplying the signals in base station 10 and relay station 20 by the transmission weights according to the present embodiment, it is possible to perform such control that each terminal 30 can avoid receiving any signal with unknown interference mixed, hence it is possible to realize MU-MIMO Two-way relaying in an efficient manner by performing subtraction of the known interference signal. Further, it is also possible at base station 10 to obtain the desired signal by performing subtraction of the interference signal and multiplication of the received weight.

Further, though description herein was given by showing an example in which the desired signal transmitted from the terminal is detected in the base station by multiplying the received signal after subtraction of the known interference by the reception weight, maximum likelihood detection (Maximum Likelihood Detection: MLD) may be preformed on the signal after subtraction of interference without performing multiplication of any reception weight. This maximum likelihood detection is a method of detecting the signal by multiplying all the transmission signal candidates and the channel estimate and selecting the transmission signal candidate of which the result of the multiplication is the closest to the received signal, and this method can produce a better reception performance though the amount of operation is increased.

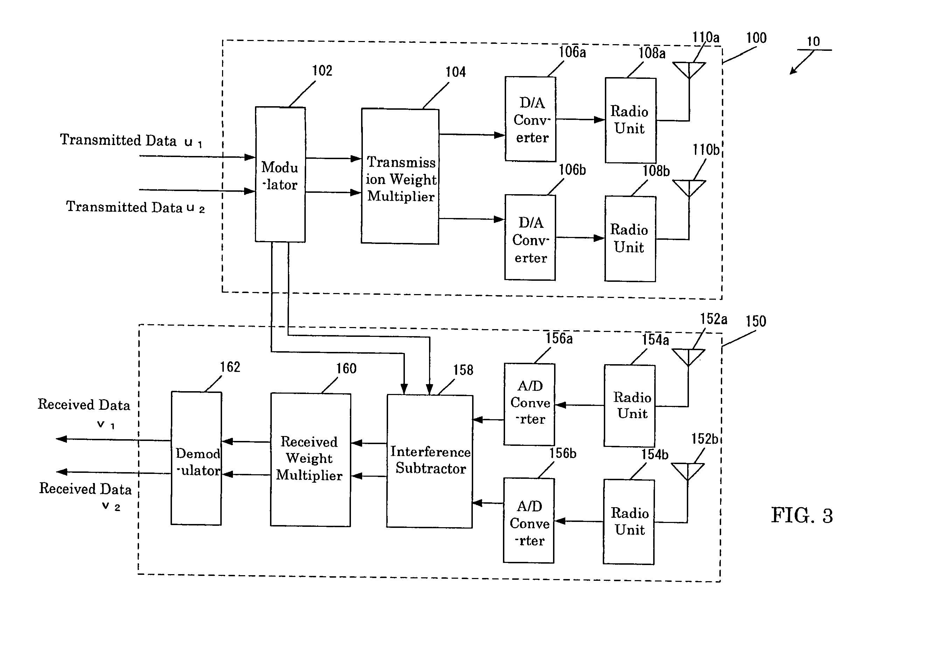

Now, the apparatus configuration of base station 10 in the mode of the present embodiment is shown in FIG. 3. As shown in FIG. 3, a transmitter 100 of base station 10 in the present embodiment includes a modulator 102, a transmission weight multiplier 104, D/A converters 106 (106a and 106b) and radio units 108 (108a and 108b) and transmitting antenna units 110 (110a and 110b) (transmitting antennas 1 and 2).

On the other hand, receiver 150 includes receiving antenna units 152 (152a and 152b) (receiving antennas 1 and 2), radio units 154 (154a and 154b), A/D converters 156 (156a and 156b), an interference subtractor 158, a reception weight multiplier 160 and a demodulator 162.

In transmitter 100, two sets of data to be transmitted (to terminal A and terminal B) are modulated at modulator 102 first, then the modulated signals are multiplied by the transmission weight given by Eq. (3) at transmission weight multiplier 104. Here, it is assumed that base station 10 grasps all the channels in advance by feedback from relay station 20 or any other means.

The two signals after transmission weight multiplication at transmission weight multiplier 104 are input to respective D/A converters 106 and converted from digital signals to analog signals. Then, the signals are frequency-converted at radio units 108 to the radio-transmissible frequency bands, and transmitted from transmitting antenna units 110, respectively

On the other hand, at receiver 150, the signals transmitted from relay station 20 are received at receiving antenna units 152 first, then radio units 154 convert the signals into A/D convertible frequencies, respectively, so that the analog signals are converted into digital signals at A/D converters 156.

Then, interference subtraction is performed by interference subtractor 158. This interference subtractor 158 is supplied with the own transmitted signals from modulator 102 so that the signals are used as the known interference signals. In this case, the channels having been multiplied on the known interference signals are also grasped, so that the signals that are produced by multiplying the channels, own transmitted signals and coefficients α and β is subtracted as the interference. The signals after this interference subtraction are input to reception weight multiplier 160, where the signals are multiplied by the reception weight given by Eq. (7), then demodulated by demodulator 162, whereby the data transmitted from the terminals and reaching via the relay station are reproduced.

With the above apparatus configuration of base station 10, it is possible to transmit the signals multiplied by the transmission weight suitable for MU-MIMO Two-way relaying and it is also possible to efficiently obtain the desired signal by subtracting the own transmitted signal as the interference signal and multiplying the reception weight. Further, as described above, it is also possible to provide a configuration using maximum likelihood detection on the signal after subtraction of the known interference, instead of using multiplication of the reception weight, as described above.

Though in FIG. 3, two antennas are provided for each of the transmitting and receiving sides, it is also possible to provide a configuration in which two antennas in all are provided and used to perform transmission and reception by switching therebetween by means of a switch because the present embodiment is not configured to perform transmission and reception simultaneously. It also goes without saying that three or more transmitting antennas and receiving antennas can be used.

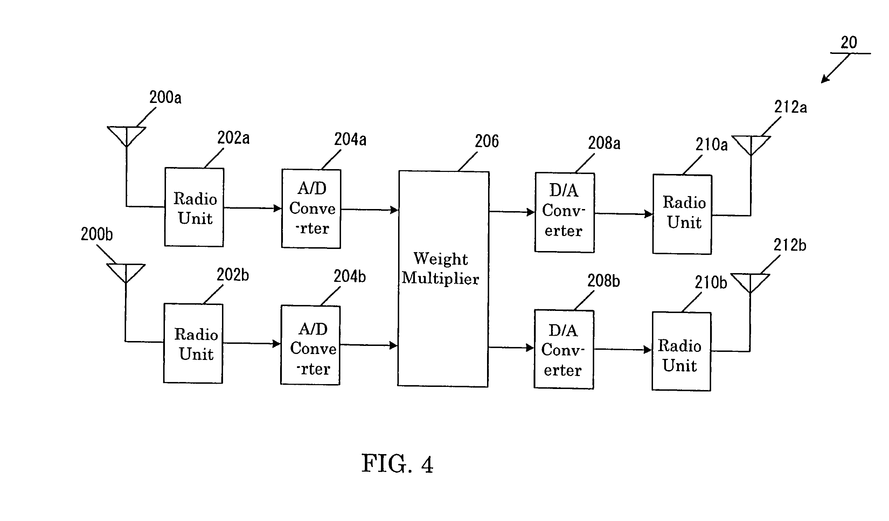

Next, FIG. 4 shows an apparatus configuration of relay station 20 in the present embodiment. As shown in FIG. 4, relay station 20 in the present embodiment includes receiving antenna units 200 (200a and 200b), radio units 202 (202a and 202b) and 210 (210a and 210b), A/D converters 204 (204a and 204b), a weight multiplier 206, D/A converters 208 (208a and 208b) and transmitting antenna units 212 (212a and 212b).

The signals transmitted from base station and two terminals 30 are received by receiving antenna units 200 of relay station 20 and frequency-converted at radio units 202 from the radio frequency to A/D convertible frequencies. The signals are then converted from analog signals into digital signals at A/D converters 204, then are multiplied at weight multiplier 206 with the weight given by Eq. (6).

Then, the signals are converted at D/A converters 208 from digital signals to analog signals and further frequency-converted to the radio-transmissible frequencies, which are transmitted from transmitting antenna units 212 toward base station 10 and terminals 30.

Usually, in the relay station, the power of the received signal is multiplied taking into consideration the attenuation in distance between the relay station and the base station, and the terminals. In this embodiment, this is assumed to be done at radio units 210. With this apparatus configuration of relay station 20, it is possible to receive the signals transmitted from base station 10 and terminals 30, multiply the received signals by weights suitable for MU-MIMO Two-way relaying and transmit the resultant signals again toward base station 10 and terminals 30, whereby it is possible to perform such control that terminals 30 can avoid receiving any signal with unknown interference mixed.

Though in FIG. 4, two antennas are provided for each of the transmitting and receiving sides, it is also possible to provide a configuration in which two antennas in all are provided and used to perform transmission and reception by switching therebetween by means of a switch because the present embodiment is not configured to perform transmission and reception simultaneously. Further, it is possible to use three or more transmitting antennas and receiving antennas as long as the number of antennas is equal to the number of terminals (the number of streams) that perform MU-MIMO communication simultaneously.

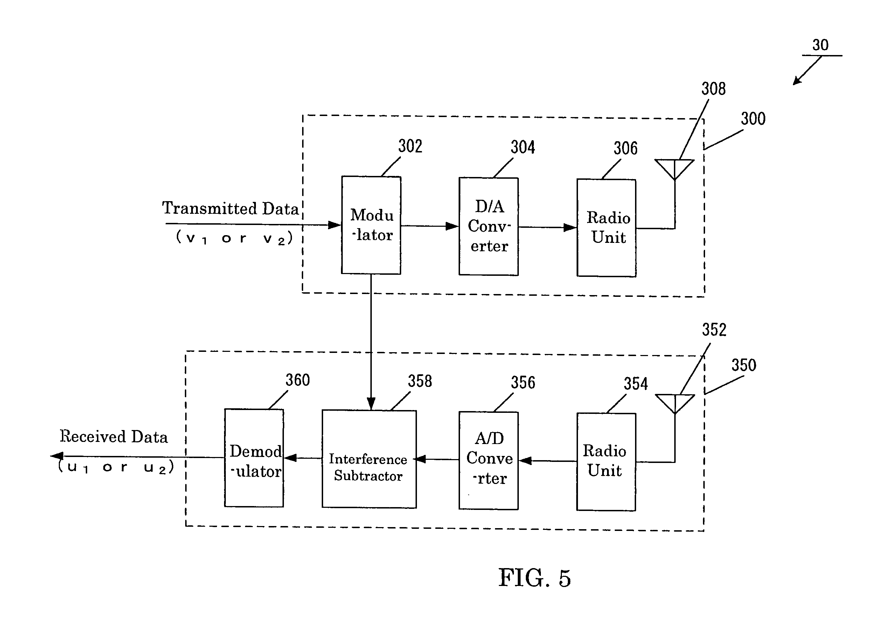

Next, FIG. 5 shows an apparatus configuration of terminal 30 in the present embodiment. Here, it is assumed that terminals 30 (terminals A and B in the present embodiment) have the same configuration. As shown in FIG. 5, a transmitter 300 of terminal 30 in the present embodiment includes a modulator 302, a D/A converter 304, a radio unit 306 and a transmitting antenna unit 308. A receiver 350 includes a receiving antenna unit 352, a radio unit 354, an A/D converter 356, an interference subtractor 358 and a demodulator 360.

In this transmitter 300, the data to be transmitted is modulated by modulator 302 first, then is converted by D/A converter 304 from digital signal to analog signal. Further, the signal is frequency-converted into a radio-transmissible frequency at radio unit 306 and then transmitted from transmitting antenna unit 308.

On the other hand, in receiver 350, the signal received by receiving antenna unit 352 is frequency-converted to an A/D convertible frequency at radio unit 354, then the signal is converted from analog signal to digital signal by A/D converter 356. Then, interference subtractor 358 performs subtraction of interference. This interference subtractor 358 is supplied with the own transmitted signal, from modulator 302 so that the signal is used as the known interference signal.

A signal that is produced by multiplying this own transmitted signal by the previously notified coefficient β from relay station 20 is subtracted as the interference signal from the received signal. The signal with the interference signal thus subtracted is demodulated at demodulator 360, whereby the data transmitted from base station 10 and reaching via relay station 20 is reproduced. With the above apparatus configuration of terminal 30, it is possible to subtract the signal that was transmitted from itself as the interference signal, from the received signal to detect the desired signal.

Though in FIG. 5, one antenna is provided for each of transmitting and receiving sides, it is also possible to provide a configuration in which one antenna in all is provided and used to perform transmission and reception by switching therebetween by means of a switch because the present embodiment is not configured to perform transmission and reception simultaneously.

With the apparatus configurations of base station 10, relay station 20 and terminals 30 as above, it is possible to multiply the signals at base station 10 and relay station 20 by weights of the present embodiment so that it is possible to perform such control that each terminal can avoid receiving any signal with unknown interference mixed. Further, it is possible to realize MU-MIMO Two-way relaying in an efficient manner by performing subtraction of the known interference signal at base station 30 and terminals 30 even when the relay station is not equipped with as many antennas as the number of antennas required to decode the signals (the signals transmitted from the base station and terminals) received in frame 1.

Moreover, though it is assumed in the present embodiment that the same frequency is used for transmission in the first time frame and the second time frame, it is possible in a s system having plural frequency channels to use different frequency channels between the first time frame and the second time frame.

In this case, the transmission and reception weights in the present embodiment mode can be represented as follows:-

[Math 18]

$$\mathbf{W}_{TX} = \alpha \mathbf{H}_1^{-1} \mathbf{G}_1 \qquad (1\,8)$$

[Math 19]

$$\alpha = \sqrt{P_{BS} \Big/ \mathrm{tr}\Big\{\!\Big(\mathbf{H}_1^{-1}\mathbf{G}_1\Big)\mathbf{Q}_u\Big(\mathbf{H}_1^{-1}\mathbf{G}_1\Big)^{H}\Big\}} \qquad (1\,9)$$

[Math 20]

$$\mathbf{W}_{RS} = \beta \mathbf{G}_2^{-1} \mathbf{G}_1^{-1} \qquad (2\,0)$$

[Math 21]

$$\beta = \sqrt{P_{RS} \Big/ \mathrm{tr}\Big\{\alpha^2 \mathbf{G}_2^{-1}\mathbf{Q}_u\Big(\mathbf{G}_2^{H}\Big)^{-1} + \mathbf{G}_2^{-1}\mathbf{Q}_v\Big(\mathbf{G}_2^{H}\Big)^{-1} + \sigma_{RS}^2 \mathbf{G}_2^{-1}\mathbf{G}_1^{-1}\Big(\mathbf{G}_1^{H}\Big)^{-1}\Big(\mathbf{G}_2^{H}\Big)^{-1}\Big\}} \qquad (2\,1)$$

[Math 22]

$$\mathbf{W}_{RX} = \mathbf{G}_2 \mathbf{H}_2^{-1} \qquad (22)$$

where, for example, $H_1$ represents the channel matrix at the time of transmitting a signal from base station 10 to relay station 20 and $G_1$ represents the channel matrix at the time of transmitting signals from two terminals 30 to relay station 20 in the first time frame, and $H_2$ represents the channel matrix at the time of transmitting a signal from relay station 20 to base station 10 and $G_2$ represents the channel matrix at the time of transmitting signals from relay station 20 to two terminals 30 in the second time frame.

Use of the above transmission and reception weights makes it possible to perform such control that each terminal can avoid receiving any signal with unknown interference mixed even when different frequency channels are used between the first time frame and the second time frame, it is hence possible to realize MU-MIMO Two-way relaying efficiently.

Each of the apparatus configurations can be realized by adding a frequency channel switch for switching between the frequency channels to be used in the first time frame and the second time frame, to the configuration illustrated in the present embodiment.

Further, it is assumed in the present embodiment that the base station and relay station have grasped all the channel variations in advance. However, the base station cannot directly acquire the channel variations between the relay station and terminals, it is hence necessary to notify the base station of the channel variations between the relay station and terminals. In contrast, the relay station can directly receive the signals transmitted from the base station and each terminal, it is hence possible to directly know the channel with the base station and the channels with terminals. Accordingly, it is possible to provide a configuration in which transmission and reception weights (or transmission weight only) are calculated using each channel matrix estimated at the relay station so that the calculated result is notified from the relay station to the base station. With this configuration, it is possible to get through the process without calculating weights separately at the base station and the relay station, hence simplify the procedures.

[The Second Embodiment]

The first embodiment was described on the MU-MIMO Two-way relaying when the transmission and reception weights based on the concept of ZF (Zero Forcing) are used. In this case, however, there are cases where noise components are emphasized in order to restore the signal to its original condition. In the second embodiment to which the present invention is applied, transmission and reception weights whose influence on noise components is taken into consideration will be shown.

Similarly to the first embodiment, the mathematical representation of three weights $W_{TX}$, $W_{RS}$ and $W_{RX}$ shown in FIG. 2 will be shown hereinbelow. First, $W_{TX}$ is represented as follows.

[Math 23]

$$\mathbf{W}_{TX} = \alpha \mathbf{W}'_{TX} \qquad (23)$$

[Math 24]

$$\mathbf{W}'_{TX} = \left\{ \mathbf{H}^H \mathbf{W}^H_{RS} \mathbf{G}^{\bullet} \mathbf{Q}_u \mathbf{G}^T \mathbf{W}_{RS} \mathbf{H} + \overline{diag} \left( \mathbf{G}^T \mathbf{W}_{RS} \mathbf{G} \mathbf{Q}_v \mathbf{G}^H \mathbf{W}^H_{RS} \mathbf{G}^{\bullet} \right) + \sigma^2_{RS} \mathbf{G}^T \mathbf{W}_{RS} \mathbf{W}^H_{RS} \mathbf{G}^{\bullet} + \sigma^2_{MS} \mathbf{I} \right\}^{-1} \mathbf{H}^H \mathbf{W}^H_{RS} \mathbf{G}^{\bullet} \mathbf{Q}_u$$

$$( 2\,4 )$$

Here, α is a coefficient that normalizes the transmission power of the base station and is represented as following expression. The square of $\sigma_{MS}$ is the power of noise of the terminals, and the second term on the right side of Eq. (24) represents a matrix composed of the off-diagonal elements of the matrix in the parentheses only.

[Math 25]

$$\alpha = \sqrt{ P_{BS} \Big/ \mathrm{tr}\!\left( \mathbf{W}'_{TX} \mathbf{Q}_u \mathbf{W}'^H_{TX} \right) }$$

$$( 2\,5 )$$

Further, $W_{RS}$ is represented as follows.

[Math 26]

$$\mathbf{W}_{RS} = \beta \mathbf{W}'_{RS}$$

$$( 2\,6 )$$

[Math 27]

$$vec\!\left( \mathbf{W}'_{RS} \right) = \left\{ \left( \mathbf{G} \mathbf{Q}_v \mathbf{G}^H \right)^T \otimes \mathbf{G}^{\bullet} \mathbf{G}^T + \sigma^2_{RS} \mathbf{I} \otimes \mathbf{G}^{\bullet} \mathbf{G}^T \right\} vec\!\left( \mathbf{G}^{\bullet} \mathbf{Q}_v \mathbf{G}^H \right)$$

$$( 2\,7 )$$

Here, vec( ) is the reshape of the matrix inside the parentheses, given in a vector representation. The first term and second term on the right side of Eq. (27) represent Kronecker products.
Here, β is a coefficient that normalizes the transmission power of the relay station and is represented by the following expression.

[Math 28]

$$\beta = \sqrt{P_{RS} \Big/ \mathrm{tr}\left\{\mathbf{W}'_{RS}\mathbf{H}\mathbf{W}_{TX}\mathbf{Q}_u\mathbf{W}^H_{TX}\mathbf{H}^H\mathbf{W}'^H_{RS} + \mathbf{W}'_{RS}\mathbf{G}\mathbf{Q}_v\mathbf{G}^H\mathbf{W}'^H_{RS} + \sigma^2_{RS}\mathbf{W}'_{RS}\mathbf{W}'^H_{RS}\right\}}$$

$$(28)$$

Further, $W_{RX}$ is represented as follows.

[Math 29]

$$\mathbf{W}_{RX} = \mathbf{Q}_v\mathbf{G}^H\mathbf{W}^H_{RS}\mathbf{H}^* \left\{\mathbf{H}^T\mathbf{W}_{RS}\mathbf{G}\mathbf{Q}_v\mathbf{G}^H\mathbf{W}^H_{RS}\mathbf{H}^* + \sigma^2_{RS}\mathbf{H}^T\mathbf{W}_{RS}\mathbf{W}^H_{RS}\mathbf{H}^* + \sigma^2_{BS}\mathbf{I}\right\}^{-1}$$

$$(29)$$

Here, the square of $\sigma_{BS}$ is the power of noise of the base station.

Use of the above transmission and reception weights makes it possible to perform weighting, taking noise influence into account and hence realize MU-MIMO Two-way relaying with a better performance compared to the case where the weights shown in the first embodiment are used.

The base station 10, relay station 20 and terminals 30 in the present embodiment can be realized using the same configurations described in the first embodiment. However, the weights and coefficients such as α and β, used in each weight multiplier should use those shown in the present embodiment.

[The Third Embodiment]

Though the above embodiments are assumed to be applied to a configuration in which the number of receiving antennas in base station 10 and relay station 20 is 2, the number of terminals is 2 and the number of antennas in each terminal is 1, the present invention can be applied to a configuration in which the number of transmitting and receiving antennas and the number of terminals are equal to or greater than those, by using channel matrixes corresponding to the situation.

For example, a case where the number of receiving antennas in base station 10 and relay station 20 is 4 and there are four terminals each having one antenna, corresponds to a mode of the above embodiment in which 2×2 channel matrixes are replaced by 4×4 matrixes and 2×1 transmission signal vectors are replaced by 4×1 vectors. With this correspondence, it is possible to use the weights described above in the same manner as those for 2×2 matrixes.

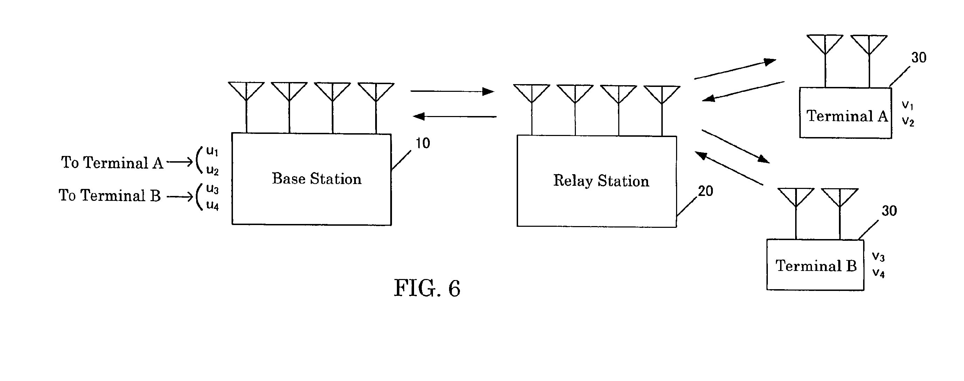

Also when the number of receiving antennas in base station 10 and relay station 20 is 4 and there are two terminals each having two antennas as shown in FIG. 6, it is possible to realize MU-MIMO Two-way relaying by using the weights described in the embodiments heretofore. Similarly to these, the present invention can also be applied to a case where the number of receiving antennas in base station 10 and relay station 20 is 4 and there exist a terminal having three antennas and two terminals having one antenna.

These weights are those designated so that each stream (the modulated signal before multiplication of $W_{TX}$) transmitted from the base station can be separately received on the terminal side. However, it is not always necessary to use the weights that enable separation of all streams when the terminal is equipped with plural antennas as shown in FIG. 6, but it is possible to use such weights that no unknown interference to the terminal will reach.

That is, for example, the interference signal for terminal A shown in FIG. 6 is $u_3$, $u_4$, $v_3$ and $v_4$, which are required so as not to be mixed in the received signal of terminal A while $u_1$ and $u_2$ are the desired signals and $v_1$ and $v_2$ are both known interference. Accordingly, it is possible to provide a configuration in which, instead of separating these signals ($u_1$, $u_2$, $v_1$ and $v_2$) by the weight control at the base station and relay station, the terminals receive the signals involving (added with) these signals and removes these by the processing at the terminals so as to detect the desired signal.

Now, the following embodiment will be described referring to such a weight control that a terminal equipped with plural antennas can avoid receiving unknown interference without the need of having all streams completely separated.

First, in the third embodiment, it is assumed that the number of receiving antennas in base station 10 and relay station 20 is 4 and there exist two terminals each having two antennas as shown in FIG. 6, and the weight to be used at the base station when the weight used at the relay station is given by that shown in the first embodiment will be demonstrated. The weight at the relay station in the first embodiment was given by the following Eq. (30).

[Math 30]

$$\mathbf{W}_{RS} = \beta \mathbf{W}_{RS}' = \beta \left(\mathbf{G}^T\right)^{-1} \mathbf{G}^{-1} \qquad (30)$$

Here, $\beta$ is a coefficient that is represented by Eq. (28) to normalize the transmission power of the relay station and each channel matrix (H, G) is given as a $4\times4$ matrix in the present embodiment. The received signal vector at the terminals when this weight is used is represented from Eq. (14) as follows. Here, $W_{TX}=\alpha W_{TX}'$ and noise components are neglected for simplicity. $\alpha$ is a coefficient that is represented by Eq. (25) to normalize the transmission power at the base station.

[Math 31]

$$\begin{aligned}
\mathbf{y}_{MS} &= \mathbf{G}^T \mathbf{W}_{RS} \left(\mathbf{H}\mathbf{W}_{TX}\mathbf{u} + \mathbf{G}\mathbf{v}\right) \\
&= \mathbf{G}^T \beta \left(\mathbf{G}^T\right)^{-1} \mathbf{G}^{-1} \left(\mathbf{H}\alpha \mathbf{W}_{TX}'\mathbf{u} + \mathbf{G}\mathbf{v}\right) \qquad (31) \\
&= \alpha\beta \mathbf{G}^{-1} \mathbf{H}\mathbf{W}_{TX}'\mathbf{u} + \beta\mathbf{v}
\end{aligned}$$

As understood from the second term on the right side of Eq. (31), when the weight given by Eq. (30) is used at the relay station, the signals (streams) transmitted from two terminals will be fully separated and received by respective terminals so that unknown interference transmitted from the other terminal will not be mixed in the received signal. Accordingly, it is possible to remove the known interference component by subtracting from the received signal the result produced at each terminal by multiplying the own transmitted signal with $\beta$.

The first term on the right side of Eq. (31) represents the desired signal components transmitted from the base station to the terminals. Since the signal addressed to the other terminal (for example, the signal addressed to terminal A) behaves as unknown interference (to terminal B), it is necessary for the base station to perform such weight control that each terminal can avoid receiving such unknown interference.

In order to achieve this, in the first and second embodiments, control is performed such that four signals (streams) addressed to terminals are all separated and received by the terminals. In the present embodiment, a weight control different from these will be described. In this case, from the first term of Eq. (31), a virtual channel through which a signal transmitted from the base station is received by each terminal is put as F=G⁻¹H. The weight control in the present embodiment is schemed so that the terminals can avoid receiving unknown interference without the need of completely separating all streams, by applying a process called block diagonalization to this channel F.

The block diagonalization (Block Diagonalization) suited to the present embodiment will be described hereinbelow. For description purposes, the virtual channel F is presented as follows.

[Math 32]

$$\mathbf{F} = \begin{pmatrix} \mathbf{F}_1 \\ \mathbf{F}_2 \end{pmatrix} = \begin{pmatrix} f_{11} & f_{12} & f_{13} & f_{14} \\ f_{21} & f_{22} & f_{23} & f_{24} \\ f_{31} & f_{32} & f_{33} & f_{34} \\ f_{41} & f_{42} & f_{43} & f_{44} \end{pmatrix} \qquad (3\,2)$$

Here, each of $F_1$ and $F_2$ is a 2×4 matrix. $F_1$ denotes the channel through which the signal is received by terminal A and $F_2$ denotes the channel through which the signal is received by terminal B. In the block diagonalization applied in the present embodiment, first of all, singular value decomposition (Singular value decomposition) is carried out on each of $F_1$ and $F_2$ that form the above channel F. The singular value decomposition is a process of representing a mxn matrix J by the product of an mxm unitary matrix S, a m×n matrix D having 0 as its off-diagonal elements and singular values of matrix J as its diagonal elements and a complex conjugate transposed matrix of an n×n unitary matrix, $T^H$, and this can be written as follows.

[Math 33]

$$\mathbf{J} = \mathbf{SDT}^H \qquad (3\,3)$$

When $F_1$ and $F_2$ in Eq. (32) are each subjected to this singular value decomposition, $F_1$ and $F_2$ can be written as follows.

[Math 34]

$$\mathbf{F}_1 = \mathbf{S}_1 \mathbf{D}_1 \mathbf{T}_1^H = \begin{pmatrix} s_{1\_11} & s_{1\_12} \\ s_{1\_21} & s_{1\_22} \end{pmatrix} \begin{pmatrix} d_{1\_11} & 0 & 0 & 0 \\ 0 & d_{1\_22} & 0 & 0 \end{pmatrix} \begin{pmatrix} t_{1\_11} & t_{1\_12} & t_{1\_13} & t_{1\_14} \\ t_{1\_21} & t_{1\_22} & t_{1\_23} & t_{1\_24} \\ t_{1\_31} & t_{1\_32} & t_{1\_33} & t_{1\_34} \\ t_{1\_41} & t_{1\_42} & t_{1\_43} & t_{1\_44} \end{pmatrix}^H$$

$$(3\,4)$$

[Math 35]

$$F_2 = S_2 D_2 T_2^H = \begin{pmatrix} s_{2\_11} & s_{2\_12} \\ s_{2\_21} & s_{2\_22} \end{pmatrix} \begin{pmatrix} d_{2\_11} & 0 & 0 & 0 \\ 0 & d_{2\_22} & 0 & 0 \end{pmatrix} \begin{pmatrix} t_{2\_11} & t_{2\_12} & t_{2\_13} & t_{2\_14} \\ t_{2\_21} & t_{2\_22} & t_{2\_23} & t_{2\_24} \\ t_{2\_31} & t_{2\_32} & t_{2\_33} & t_{2\_34} \\ t_{2\_41} & t_{2\_42} & t_{2\_43} & t_{2\_44} \end{pmatrix}^H$$

$$( 3 5 )$$

Here, when $T_1$ is multiplied from the right on both sides of Eq. (34), the equation is written as follows since $T_1$ is a unitary matrix.

[Math 36]

$$F_1 T_1 = S_1 D_1 = \begin{pmatrix} s_{1\_11} d_{1\_11} & s_{1\_12} d_{1\_22} & 0 & 0 \\ s_{1\_21} d_{1\_11} & s_{1\_22} d_{1\_22} & 0 & 0 \end{pmatrix} \qquad ( 3 6 )$$

From this result, it is understood that the products of the first row of $F_1$ with the third and fourth columns of $T_1$ are both zero. Similarly, it is also understood that the products of the second row of $F_1$ with the third and fourth columns of $T_1$ are zero. This means that if a signal that is multiplied by the third and fourth columns of $T_1$ passes through the channel of $F_1$, the signal will not be received at all on the receiver side. The same thing can be said for the result when singular value decomposition is performed on $F_2$.

Using this nature, it is possible to produce a transmission weight of the base station as follows, which can control such that each terminal can avoid receiving unknown interference to the terminal among the signals transmitted from the base station or which can block-diagonalize the virtual channel F.

[Math 37]

$$W'_{TX} = \begin{pmatrix} t_{2\_13} & t_{2\_14} & t_{1\_13} & t_{1\_14} \\ t_{2\_23} & t_{2\_24} & t_{1\_23} & t_{1\_24} \\ t_{2\_33} & t_{2\_34} & t_{1\_33} & t_{1\_34} \\ t_{2\_43} & t_{2\_44} & t_{1\_43} & t_{1\_44} \end{pmatrix} \qquad ( 3 7 )$$

When the transmission weight represented by Eq. (37) is used at the base station, the first term on the right side of Eq. (31) is written as follows.

[Math 38]

$$\alpha\beta\mathbf{G}^{-1}\mathbf{HW}_{TX}'\mathbf{u} = \alpha\beta\mathbf{FW}_{TX}'\mathbf{u} = \begin{pmatrix} f_{11}' & f_{12}' & 0 & 0 \\ f_{21}' & f_{22}' & 0 & 0 \\ 0 & 0 & f_{33}' & f_{34}' \\ 0 & 0 & f_{43}' & f_{44}' \end{pmatrix}\begin{pmatrix} u_1 \\ u_2 \\ u_3 \\ u_4 \end{pmatrix} \qquad (38)$$

Here, $f_{11}'$ and others are represented by the following equations.

[Math 39]

$$f_{11}' = f_{11}t_{2\_13} + f_{12}t_{2\_23} + f_{13}t_{2\_33} + f_{14}t_{2\_43}$$
$$f_{12}' = f_{11}t_{2\_14} + f_{12}t_{2\_24} + f_{13}t_{2\_34} + f_{14}t_{2\_44}$$
$$f_{21}' = f_{21}t_{2\_13} + f_{22}t_{2\_23} + f_{23}t_{2\_33} + f_{24}t_{2\_43}$$
$$f_{22}' = f_{21}t_{2\_14} + f_{22}t_{2\_24} + f_{23}t_{2\_34} + f_{24}t_{2\_44} \qquad (39)$$
$$f_{33}' = f_{31}t_{1\_13} + f_{32}t_{1\_23} + f_{33}t_{1\_33} + f_{34}t_{1\_43}$$
$$f_{34}' = f_{31}t_{1\_14} + f_{32}t_{1\_24} + f_{33}t_{1\_34} + f_{34}t_{1\_44}$$
$$f_{43}' = f_{41}t_{1\_13} + f_{42}t_{1\_23} + f_{43}t_{1\_33} + f_{44}t_{1\_43}$$
$$f_{44}' = f_{41}t_{1\_14} + f_{42}t_{1\_24} + f_{43}t_{1\_34} + f_{44}t_{1\_44}$$

It is understood fromEq. (38) that the signal received by terminal A is the combined signal of $u_1$ and $u_2$ without including $u_3$ and $u_4$. It is also understood that the signal received by terminal B is the combined signal of $u_3$ and $u_4$ without including $u_1$ and $u_2$. That is, transmission of the signal multiplied at the base station by the block-diagonalized transmission weight makes it possible to control such that each terminal receives the signal including the desired signal for itself (the signal not separated into streams) and can avoid receiving the unknown interference which the base station transmits to the other terminal.

In this way, use of the block-diagonalized transmission weight given by Eq. (37) at the base station and use of the weight given by Eq. (30) at the relay station, make it possible to perform such control that each terminal can avoid receiving any signal mixed with unknown interference.

At each terminal, the combined signal of the desired signals, left after subtraction of the known interference signal (the second term on the right side of Eq. (31)) from the received signal, may be subjected to most likelihood detection or the like to thereby separate the desired signals (streams). In comparison to the first and second embodiments in which all of desired signals (streams) are separated by multiplying linear weights and received by the terminals, in the present embodiment plural streams addressed to one terminal are not separated though the streams addressed to different terminals are separated by linear weights, so that this configuration enhances the possibility of obtaining good reception performance under a condition in which separation by linear processing is not suitable such as in a case where there is correlation between antennas.

Here, the upper left 2×2 matrix and lower right 2×2 matrix in the matrix shown in Eq. (38) need to be grasped at terminal A and terminal B, respectively. To enable this, it is necessary to transmit a known signal for channel estimation from the base station in advance of transmission of the data signal. Upon this, the channel estimation signal is multiplied with the same weight as that at the time of transmission of the data signal, at the base station and relay station, and the thus processed channel estimation signal is received whereby it is possible to estimate the variation of the necessary virtual channel. It is also possible to provide a configuration in which instead of using maximum likelihood detection the received is subjected to a linear process such as ZF, MMSE (Minimum Mean Square Error) or the like to perform signal detection.

On the other hand, on the base station side, a mixed signal of the desired signal and the own transmitted signal multiplied by the aforementioned base station transmission weight is received, but the own transmitted signal multiplied by the base station transmission weight is the known interference, so that it is possible to subtract the interference from the received signal in the same manner as in the embodiments heretofore.

In the present embodiment, since the same weight as in the first embodiment is multiplied at the relay station, the signal after subtraction of the known interference results in the same signal with that of the first embodiment. Accordingly, it is possible to detect the desired signal by multiplying the same receiving weight as that of the first embodiment. It is also possible to perform maximum likelihood detection.

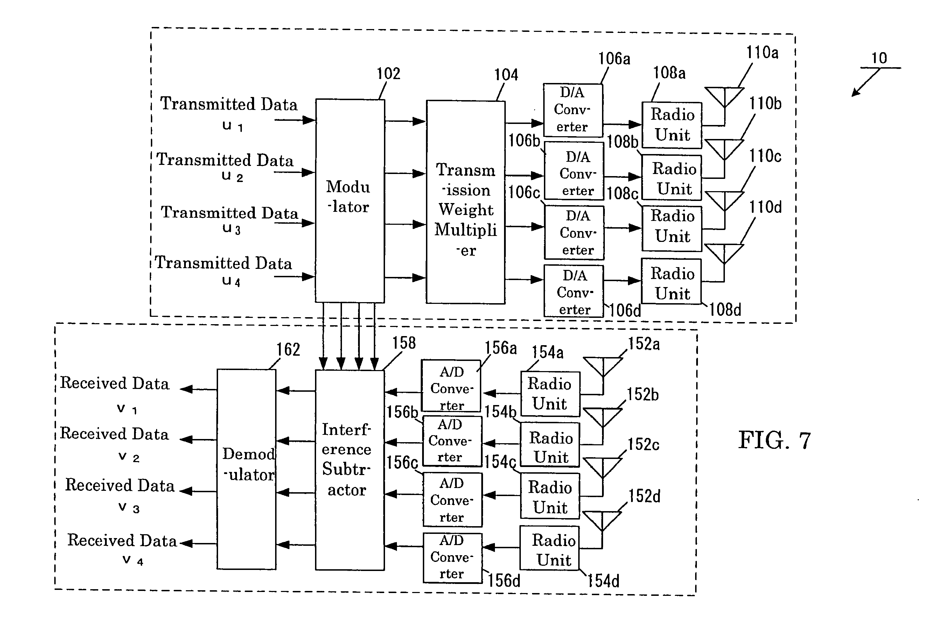

Here, FIG. 7 shows an apparatus configuration of base station 10 in the present embodiment. As shown in FIG. 7, the base station 10 in the present embodiment has a configuration of the apparatus shown in FIG. 3 in which the number of antennas is increased, and the same reference numerals as in FIG. 3 are used. However, the base station shown in FIG. 7 is configured so as to perform maximum detection on the desired signal at demodulator 162, instead of performing receiving weight multiplication. Further, in this base station, the aforementioned block-diagonalized transmission weight is multiplied in transmission weight multiplier 104.

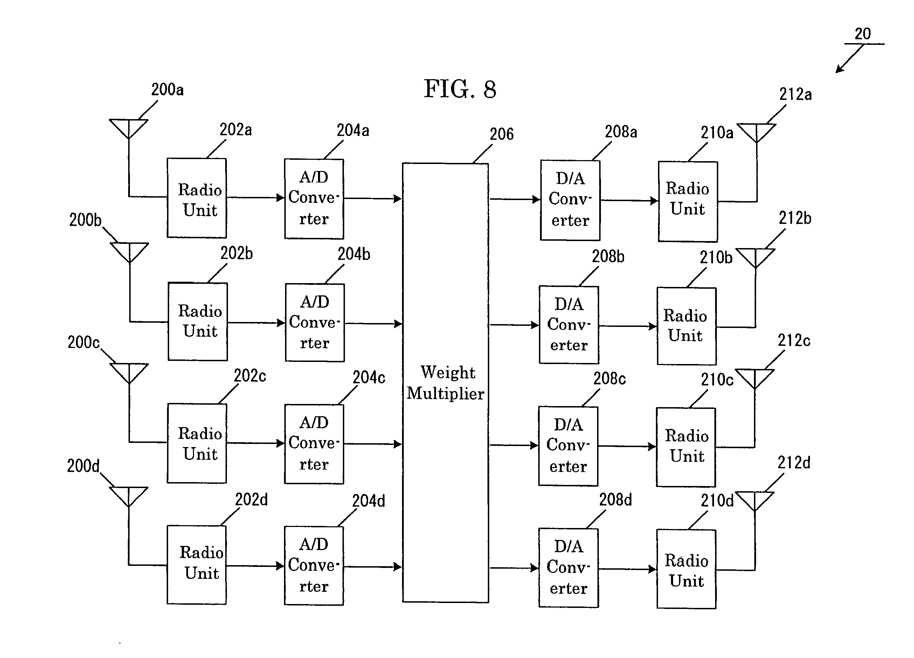

Next, FIG. 8 shows an apparatus configuration of relay station 20 in the present invention. As shown in FIG. 8, the relay station 20 in the present embodiment has a configuration of the apparatus shown in FIG. 4 in which the number of antennas is increased, and the same reference numerals as in FIG. 4 are used. As stated above, the weight multiplied at weight multiplier 206 is one that can be represented by the same expression as that shown in the first embodiment.

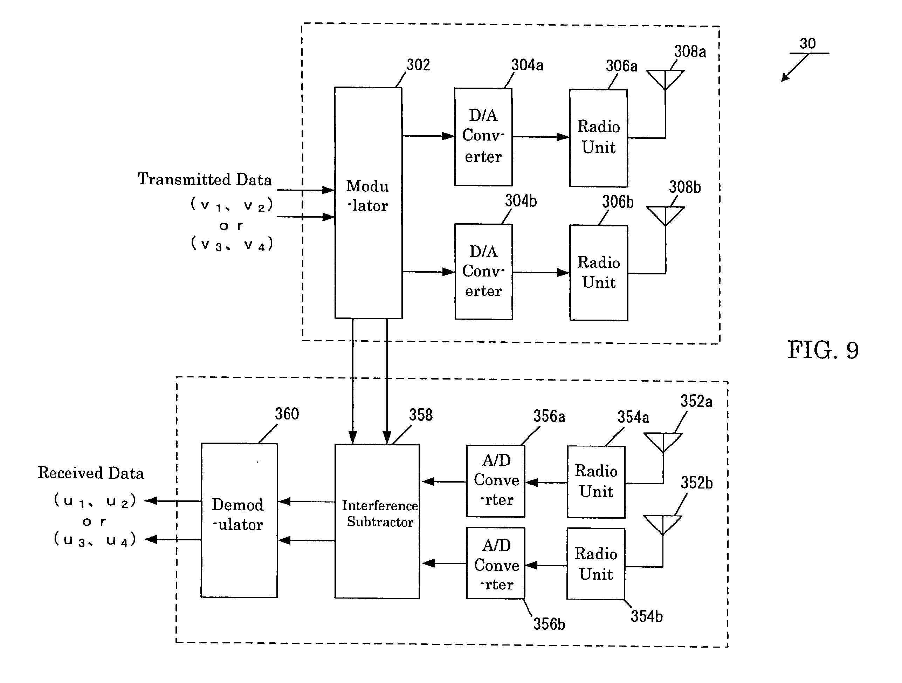

Next, FIG. 9 shows an apparatus configuration of terminal 30 in the present invention. As shown in FIG. 9, the terminal 30 in the present embodiment has a configuration of the apparatus shown in FIG. 5 in which the number of antennas is increased, and the same reference numerals as in FIG. 5 are used.

However, there are two signals (streams) to be transmitted, either pair of $v_1$ and $v_2$ or pair of $v_3$ and $v_4$ is transmitted. Further, as described above, in the present embodiment, since two desired signals (streams) are received without being separated, it is necessary to separate the desired signals by the receiving process on the terminal side, and maximum likelihood detection is performed at demodulator 360 in the terminal apparatus shown in FIG. 9.

With the above apparatus configurations, the signal multiplied by the transmission weight that has been block-diagonalized as shown above is transmitted, whereby it is possible to perform such a control that the terminal can avoid receiving unknown interference without completely separating the desired signals into individual streams.

[The Fourth Embodiment]

The third embodiment was described on the case where the weight that has been calculated by block diagonalization is used at the base station and the weight based on the ZF scheme is used at the relay station. However, it is also possible to perform signal transmission by using a weight calculated using block diagonalization at the relay station similarly to the base station. The fourth embodiment shows a case where a weight calculated using block diagonalization is used also in the relay station.

First, as shown in Eq. (14) and the first equation in Eq. (31), the received signal at the terminal when MU-MIMO Two-way Relaying of the present invention is implemented is represented as follows. Here, for simplicity, noise components are neglected.

[Math 40]

$$\mathbf{y}_{MS} = \mathbf{G}^T \mathbf{W}_{RS}\left(\mathbf{H}\mathbf{W}_{TX}\mathbf{u} + \mathbf{G}\mathbf{v}\right) \qquad (40)$$

The second term in this Eq. (40) is the term, representing a signal that is produced by multiplying the signal transmitted from each terminal and received at relay station in frame 1 by a weight at the relay station and that is transmitted from the relay station in frame 2, and including the known interference transmitted by the terminal and unknown interference transmitted from the other terminal. In order to realize the MU-MIMO Two-way Relaying of the present invention, first it is necessary to perform control with $W_{RS}$ such that unknown interference transmitted from the other terminal will not be mixed in the received signal from each terminal. In the present exemplary embodiment, $W_{RS}$ is calculated using block diagonalization. Here, the second term in Eq. (40) is rewritten as follows. Here, $\beta$ is a coefficient

that is given by Eq. (28) to normalize the transmission power at the relay station.

[Math 41]

$$\mathbf{G}^T \mathbf{W}_{RS} \mathbf{G} \mathbf{v} = \beta \mathbf{G}^T \mathbf{W}'_{RS1} \mathbf{W}'_{RS2} \mathbf{G} \mathbf{v} \qquad (41)$$

In this Eq. (41), the second term of Eq. (40) is rewritten so that the relay station weight $W_{RS}$ is given by the product of $W'_{RS1}$ and $W'_{RS2}$. Of these, $W'_{RS1}$ is a matrix that performs block diagonalization by regarding $G^T$ multiplied from the left as the virtual channel F in the third embodiment while $W'_{RS2}$ is a matrix that performs block diagonalization by regarding G multiplied from the right as the virtual channel F in the third embodiment. That is, $G^T W'_{RS1}$ creates a block-diagonalized matrix as shown in Eq. (38) and similarly $W'_{RS2}G$ creates also a block-diagonalized matrix.

Then, since the product of these ($G^T W'_{RS1}W'_{RS2}G$) also creates a block-diagonalized matrix, it is possible in the secondtermofEq. (40) toobtain $W_{RS}(=W'_{RS1}W'_{RS2})$ thatcanperform such control that the received signal of each terminal will not be mixed with unknown interference transmitted from the other terminal.

Here, calculation of $W'_{RS1}$ can be made in the same manner as illustrated in the third embodiment, but $W'_{RS2}$ needs to be calculated by a little bit different procedure. This is attributed to the fact that the virtual channel matrix G to be block diagonalized is multiplied from the right of $W'_{RS2}$, and the virtual channel matrix corresponding to the Eq. (32) in the third embodiment is represented as follows.

[Math 42]

$$\mathbf{G} = (\mathbf{G}_1 \quad \mathbf{G}_2) = \begin{pmatrix} g_{11} & g_{12} & g_{13} & g_{14} \\ g_{21} & g_{22} & g_{23} & g_{24} \\ g_{31} & g_{32} & g_{33} & g_{34} \\ g_{41} & g_{42} & g_{43} & g_{44} \end{pmatrix} \qquad (42)$$

Here, $G_1$ and $G_2$ are both a 4×2 matrix. When these matrixes $G_1$ and $G_2$ are subject to singular value-decomposition, the results as follows are obtained.

[Math 43]

$$\mathbf{F}_1 = \mathbf{S}_1 \mathbf{D}_1 \mathbf{T}_1^H = \begin{pmatrix} s_{1\_11} & s_{1\_12} & s_{1\_13} & s_{1\_14} \\ s_{1\_21} & s_{1\_22} & s_{1\_23} & s_{1\_24} \\ s_{1\_31} & s_{1\_32} & s_{1\_33} & s_{1\_34} \\ s_{1\_41} & s_{1\_42} & s_{1\_43} & s_{1\_44} \end{pmatrix} \begin{pmatrix} d_{1\_11} & 0 \\ 0 & d_{1\_22} \\ 0 & 0 \\ 0 & 0 \end{pmatrix} \begin{pmatrix} t_{1\_11} & t_{1\_12} \\ t_{1\_21} & t_{1\_22} \end{pmatrix}^H$$

$$(43)$$

[Math 44]

$$\mathbf{F}_2 = \mathbf{S}_2\mathbf{D}_2\mathbf{T}_2^H = \begin{pmatrix} s_{2\_11} & s_{2\_12} & s_{2\_13} & s_{2\_14} \\ s_{2\_21} & s_{2\_22} & s_{2\_23} & s_{2\_24} \\ s_{2\_31} & s_{2\_32} & s_{2\_33} & s_{2\_34} \\ s_{2\_41} & s_{2\_42} & s_{2\_43} & s_{2\_44} \end{pmatrix} \begin{pmatrix} d_{2\_11} & 0 \\ 0 & d_{2\_22} \\ 0 & 0 \\ 0 & 0 \end{pmatrix} \begin{pmatrix} t_{2\_11} & t_{2\_12} \\ t_{2\_21} & t_{2\_22} \end{pmatrix}^H$$

$$(44)$$

Using the thus obtained unitary matrixes $S_1$ and $S_2$, $W'_{RS2}$ is obtained as follows.

[Math 45]

$$\mathbf{W}'_{RS2} = \begin{pmatrix} s^*_{2\_13} & s^*_{2\_23} & s^*_{2\_33} & s^*_{2\_43} \\ s^*_{2\_14} & s^*_{2\_24} & s^*_{2\_34} & s^*_{2\_44} \\ s^*_{1\_13} & s^*_{1\_23} & s^*_{1\_33} & s^*_{1\_43} \\ s^*_{1\_14} & s^*_{1\_24} & s^*_{1\_34} & s^*_{1\_44} \end{pmatrix} \qquad (45)$$

Here, s* represents the complex conjugate of s. $W'_{RS2}$ is obtained by the above procedure, and transmitted together with $W'_{RS1}$ from each terminal in frame 1 so as to be able to block diagonalize the virtual channel matrix through which the signal transmitted from the relay station in frame 2, whereby it is possible to perform such a control that each terminal can avoid receiving unknown interference transmitted from the other terminal, without having the known signal (interference) transmitted from its own, separated into different streams. Then, at the terminal, it is possible to subtract the known interference by grasping the minor matrix included in the received signal of itself, of the block-diagonalized matrix.

Further, as to the transmission weight used in the base station, by putting the virtual channel matrix F in the third embodiment as $F=G^TW_{RS}G$ (here, $W_{RS}$ is the weight obtained in the present embodiment), it is possible to perform block diagonalization in the same manner as in the third embodiment.

At the terminal receiving the thus block-diagonalized signal, it is possible to detect the desired signal by performing maximum likelihood detection, multiplication of the reception weight or the like after subtraction of the known interference, similarly to the third embodiment. Also in the base station, it is possible to detect the desired signal by performing maximum likelihood detection, multiplication of the reception weight or the like after subtraction of the known interference, similarly to the embodiments heretofore.

As described above, the present embodiment has been described taking an example in which a weight making use of block diagonalization is used also in the relay station. The apparatuses of the base station, relay station and terminals can be realized by the same configurations as those illustrated in the third embodiment (FIGS. 7, 8 and 9).

[The fifth Embodiment]

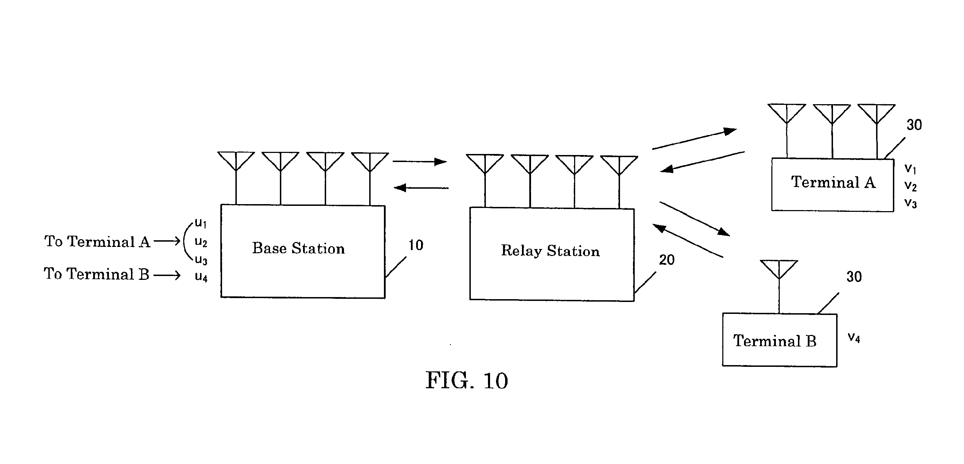

In the third and fourth embodiments, the weight making use of block diagonalization was demonstrated in the cases where the numbers of receiving antennas in base station 10 and relay station 20 are each four while two terminals each having two antennas exist or each terminal has the same number of antenna with others. However, the MU-MIMO Two-way Relaying according to the present invention can support a case where there are terminals having different numbers of antennas as shown in FIG. 10. The fifth embodiment will be described on the weight control in such a case.

First, the control in which all the streams are separated as shown in the first and second embodiments can be applied similarly to the case shown in FIG. 10.

Further, the control using a weight making use of block diagonalization as illustrated in the third and fourth embodiments can also be applied. In this case, however, since the number of desired signals (streams) and the number of interference (streams) are different between terminals A and B, it is necessary to perform block diagonalization taking this into account.

Now, taking the third embodiment as an example, it is specifically necessary to perform the following mathematical operations by putting $F_1$ that forms the virtual channel matrix of Eq. (32) as a $3\times4$ matrix and $F_2$ as a $1\times4$ matrix. At this point, similarly to the third embodiment, $F_1$ represents the channel through which the signal received at terminal A passes and $F_2$ represents the channel through which the signal received at terminal B passes. As these $F_1$ and $F_2$ are each subjected to singular value decomposition similarly to the third embodiment, $F_1$ and $F_2$ can be written as follows.

[Math 46]

$$\mathbf{F}_1 = \mathbf{S}_1\mathbf{D}_1\mathbf{T}_1^H = \begin{pmatrix} s_{1\_11} & s_{1\_12} & s_{1\_13} \\ s_{1\_21} & s_{1\_22} & s_{1\_23} \\ s_{1\_31} & s_{1\_32} & s_{1\_33} \end{pmatrix} \begin{pmatrix} d_{1\_11} & 0 & 0 & 0 \\ 0 & d_{1\_22} & 0 & 0 \\ 0 & 0 & d_{1\_33} & 0 \end{pmatrix} \begin{pmatrix} t_{1\_11} & t_{1\_12} & t_{1\_13} & t_{1\_14} \\ t_{1\_21} & t_{1\_22} & t_{1\_23} & t_{1\_24} \\ t_{1\_31} & t_{1\_32} & t_{1\_33} & t_{1\_34} \\ t_{1\_41} & t_{1\_42} & t_{1\_43} & t_{1\_44} \end{pmatrix}^H$$

$$(46)$$

[Math 47]

$$\mathbf{F}_2 = \mathbf{S}_2\mathbf{D}_2\mathbf{T}_2^H = 1\begin{pmatrix} d_2 & 0 & 0 & 0 \end{pmatrix} \begin{pmatrix} t_{2\_11} & t_{2\_12} & t_{2\_13} & t_{2\_14} \\ t_{2\_21} & t_{2\_22} & t_{2\_23} & t_{2\_24} \\ t_{2\_31} & t_{2\_32} & t_{2\_33} & t_{2\_34} \\ t_{2\_41} & t_{2\_42} & t_{2\_43} & t_{2\_44} \end{pmatrix}^H \qquad (47)$$

Further, the transmission weight at the base station that can block-diagonalize the virtual channel F is given as follows.

[Math 48]

$$\mathbf{W}'_{TX} = \begin{pmatrix} t_{2\_12} & t_{2\_13} & t_{2\_14} & t_{1\_14} \\ t_{2\_22} & t_{2\_23} & t_{2\_24} & t_{1\_24} \\ t_{2\_32} & t_{2\_33} & t_{2\_34} & t_{1\_34} \\ t_{2\_42} & t_{2\_43} & t_{2\_44} & t_{1\_44} \end{pmatrix} \qquad (48)$$

Use of this weight makes it possible to block-diagonalize the channel through which the signal transmitted from the base station reaches the terminals even when there are plural terminals having different numbers of antennas as shown in FIG. 10, hence it is possible to cause each terminal not to receive unknown interference whilst performing such a control as not to separate all the streams.

Though the description herein was given taking the third embodiment as an example, the weight control using the block diagonalization at the relay station as in the fourth embodiment can also be applied, and hence it is possible to realize the MU-MIMO Two-way Relaying when plural terminals having different numbers of antennas exist as shown in FIG. 10.

In this way, the MU-MIMO Two-way Relaying according to the present invention does not require that all the terminals have the same number of antennas, and can perform efficient transmission via a relay station even under a condition that plural terminals having different number of antennas exist.

Further, in the embodiments heretofore, the apparatus equipped with plural antennas to perform bidirectional communication with two terminals is called a base station and the apparatus equipped with plural antennas for relaying bidirectional communication between the base station and the terminals is called a relay station. However, the present invention can be applied to a system in which a terminal having plural antennas performs bidirectional communication with plural terminals. Further, instead of a relay station dedicated for relaying, an apparatus that normally operates as a base station may be adapted to function as a relay station. Alternatively, the present invention can be applied even to a case where a terminal including a plurality of antennas operates as a relay station.

Moreover, in order to optimize the base station transmission weight and th relay station transmission weight, optimizing criteria (such as maximizing the transmission rate, minimizing MSE (Mean Square Error and the like) are set up first, then the formulas of the respective weights that satisfy those criteria are calculated. Since the thus obtained base station transmission weight and relay station transmission weight are correlated to each other, it is impossible to obtain the optimal values by a single operation, hence it is necessary to perform optimization by repeated operations.

Specifically, one of the weights is initialized and the other weight is calculated using the initialized weight. Then, the process for updating the value of the other weight (the weight initialized first) using the calculated weight is repeated until the two weight values converge. The thus obtained final values can be regarded as the respective optimal weights under the optimizing criteria. The base station transmission weight and relay station transmission weight according to the present invention can be determined by such an iteration process too.

Description of Reference Numerals

1 radio communication system

10 base station

100 transmitter

102 modulator
104 transmission weight multiplier
106, 106a, 106b D/A converter
108, 108a, 108b radio unit
110, 110a, 110b transmitting antenna unit

150 receiver

152, 152a, 152b receiving antenna unit
154, 154a, 154b radio unit
156, 156a, 156b A/D converter
158 interference subtractor

160 reception weight multiplier
162 demodulator

20 relay station

200, 200a, 200b receiving antenna unit
202, 202a, 202b radio unit
204, 204a, 204bA/D converter
206 weight multiplier
208, 208a, 208b D/A converter
210, 210a, 210b radio unit

30 terminal

300 transmitter

302 modulator
304 D/A converter
306 radio unit
308 transmitting antenna unit

350 receiver

352 receiving antenna unit
354 radio unit
356 A/D converter
358 interference subtractor
360 demodulator

**Claims**

1. A radio communication system performing bidirectional communication between a base station including a plurality of transmitting and receiving antennas and a plurality of terminals using a same frequency via a relay station including a plurality of transmitting and receiving antennas, **characterized in that**
the base station and plural terminals transmit signals to the relay station simultaneously in a first time frame,
the relay station includes:

a receiving means for receiving the signals transmitted in the first time frame as received signals; and,
a transmitting means for generating a transmitted signal by multiplying the received signals by a relay station transmission weight $W_{RS}$ and transmitting the transmitted signal to the base station and plural terminals in a second time frame.

2. The radio communication system according to Claim 1, wherein the relay station transmission weight $W_{RS}$ is generated at least based on a channel between the relay station and terminals.

3. The radio communication system according to Claim 1 or 2, wherein the signal transmitted from the base station in the first time frame is a signal that is produced by multiplying a modulated signal by a base station transmission weight $W_{TX}$.

4. The radio communication system according to Claim 3, wherein the base station transmission weight $W_{TX}$ is generated at least based on the channel between the base station and the relay station, or a channel between the relay station and terminals.

**5.** The radio communication system according to Claim 4, wherein the relay station transmission weight $W_{RS}$ and the base station transmission weight $W_{TX}$ are generated so as to have the transmitted streams from the base station all separated and received by individual terminals.

**6.** The radio communication system according to any one of Claims 3 to 5, wherein each terminal having received the signal transmitted from the relay station in the second time frame generates an interference signal based on the signal that the terminal transmitted in the first time frame and subtracts the generated interference signal from the received signal to detect the signal transmitted from the base station in the first frame.

**7.** The radio communication system according to any one of Claims 3 to 6, wherein the base station having received the signal transmitted from the relay station in the second time frame generates an interference signal based on the signal that the base station transmitted in the first time frame and subtracts the generated interference signal from the received signal and multiplies the signal after subtraction of the interference signal by a reception weight $W_{RX}$ to detect the signal transmitted from the terminal.

**8.** The radio communication system according to Claim 7, wherein the reception weight $W_{RX}$ is generated at least based on the channel between the base station and the relay station, or the channel between the relay station and the terminals.

**9.** The radio communication system according to Claim 8, wherein the relay station transmission weight $W_{RS}$, the base station transmission weight $W_{TX}$ and the reception weight $W_{RX}$ are represented as:

[Math 1]

$$\mathbf{W}_{TX} = \alpha \mathbf{H}^{-1}\mathbf{G}$$

$$\mathbf{W}_{RS} = \beta \left(\mathbf{G}^{T}\right)^{-1}\mathbf{G}^{-1}$$

$$\mathbf{W}_{RX} = \mathbf{G}^{T}\left(\mathbf{H}^{T}\right)^{-1}$$

$$\alpha = \sqrt{M \Big/ \mathrm{tr}\left\{\left(\mathbf{H}^{-1}\mathbf{G}\right)\left(\mathbf{H}^{-1}\mathbf{G}\right)^{H}\right\}}$$

$$\beta = \sqrt{P_{RS} \Big/ \mathrm{tr}\left\{\alpha^{2}\left(P_{BS}/M\right)\left(\mathbf{G}^{T}\right)^{-1}\left(\mathbf{G}^{*}\right)^{-1} + \left(P_{MS}/M\right)\left(\mathbf{G}^{T}\right)^{-1}\left(\mathbf{G}^{*}\right)^{-1} + \sigma_{RS}^{2}\left(\mathbf{G}^{T}\right)^{-1}\mathbf{G}^{-1}\left(\mathbf{G}^{H}\right)^{-1}\left(\mathbf{G}^{*}\right)^{-1}\right\}}$$

where H is the channel matrix between the base station and the relay station, G is the channel matrix between the relay station and the plural terminals, $P_{BS}$ is the total transmission power of the base station, $P_{RS}$ is the total transmission power of the relay station, $P_{MS}$ is the sum of transmission powers of the terminals, the covariance matrix of the transmitted signal from base station before multiplication of the first transmission weight $W_{TX}$ is the unit matrix, M is the total number of antennas of the terminals, the square of $\sigma_{RS}$ is the noise power at the relay station.

**10.** The radio communication system according to Claim 9, wherein the relay station transmission weight $W_{RS}$, the base station transmission weight $W_{TX}$ and the reception weight $W_{RX}$ are represented as:

[Math 2]

$$\mathbf{W}_{TX} = \alpha \mathbf{W}'_{TX}$$

$$\mathbf{W}'_{TX} = \left\{ \mathbf{H}^H \mathbf{W}^H_{RS} \mathbf{G}^\bullet \mathbf{Q}_u \mathbf{G}^T \mathbf{W}_{RS} \mathbf{H} + \overline{diag} \left( \mathbf{G}^T \mathbf{W}_{RS} \mathbf{G} \mathbf{Q}_v \mathbf{G}^H \mathbf{W}^H_{RS} \mathbf{G}^\bullet \right) + \sigma^2_{RS} \mathbf{G}^T \mathbf{W}_{RS} \mathbf{W}^H_{RS} \mathbf{G}^\bullet + \sigma^2_{MS} \mathbf{I} \right\}^{-1} \mathbf{H}^H \mathbf{W}^H_{RS} \mathbf{G}^\bullet \mathbf{Q}_u$$

$$\mathbf{W}_{RS} = \beta \mathbf{W}'_{RS}$$

$$\mathbf{W}_{RX} = \mathbf{Q}_v \mathbf{G}^H \mathbf{W}^H_{RS} \mathbf{H}^\bullet \left\{ \mathbf{H}^T \mathbf{W}_{RS} \mathbf{G} \mathbf{Q}_v \mathbf{G}^H \mathbf{W}^H_{RS} \mathbf{H}^\bullet + \sigma^2_{RS} \mathbf{H}^T \mathbf{W}_{RS} \mathbf{W}^H_{RS} \mathbf{H}^\bullet + \sigma^2_{BS} \mathbf{I} \right\}^{-1}$$

$$\alpha = \sqrt{P_{BS} \Big/ \mathrm{tr} \left( \mathbf{W}'_{TX} \mathbf{Q}_u \mathbf{W}'^H_{TX} \right)}$$

$$\beta = \sqrt{P_{RS} \Big/ \mathrm{tr} \left\{ \mathbf{W}'_{RS} \mathbf{H} \mathbf{W}_{TX} \mathbf{Q}_u \mathbf{W}^H_{TX} \mathbf{H}^H \mathbf{W}'^H_{RS} + \mathbf{W}'_{RS} \mathbf{G} \mathbf{Q}_v \mathbf{G}^H \mathbf{W}'^H_{RS} + \sigma^2_{RS} \mathbf{W}'_{RS} \mathbf{W}'^H_{RS} \right\}}$$

$$vec\left( \mathbf{W}'_{RS} \right) = \left\{ \left( \mathbf{G} \mathbf{Q}_v \mathbf{G}^H \right)^T \otimes \mathbf{G}^\bullet \mathbf{G}^T + \sigma^2_{RS} \mathbf{I} \otimes \mathbf{G}^\bullet \mathbf{G}^T \right\} vec\left( \mathbf{G}^\bullet \mathbf{Q}_v \mathbf{G}^H \right)$$

where H is the channel matrix between the base station and the relay station, G is the channel matrix between the relay station and the plural terminals, $P_{BS}$ is the total transmission power of the base station, $P_{RS}$ is the total transmission power of the relay station, $P_{MS}$ is the sum of transmission powers of the terminals, $Q_u$ is the covariance matrix of the transmitted signal from the base station before multiplication of the base station transmission weight $W_{TX}$, $Q_v$ is the covariance matrix of the transmitted signal of base station, M is the total number of antennas of the terminals, the square of $\sigma_{BS}$ is the noise power at the base station, the square of $\sigma_{RS}$ is the noise power at the relay station and , the square of $\sigma_{MS}$ is the noise power of the terminals.

11. The radio communication system according to any one of Claims 1 to 10, wherein all the plural terminals have a same number of antennas.

12. The radio communication system according to any one of Claims 1 to 11, wherein the plural terminals have a plurality of antennas respectively.

13. A base station having a plurality of transmitting and receiving antennas and performing bidirectional communication with a plurality of terminals using a same frequency via a relay station having a plurality of transmitting and receiving antennas, the base station comprising:

   a transmitting means for transmitting a signal addressed to the plural terminals toward the relay station in a first time frame; and
   a receiving means for receiving a signal transmitted from the relay station in a second time frame.

14. The base station according to Claim 13, wherein the transmitting means transmits a signal that is produced by multiplying a modulated signal by a base station transmission weight $W_{TX}$.

15. The base station according to Claim 14, wherein the base station transmission weight $W_{TX}$ is generated at least based on a channel between the base station and the relay station, or a channel between the relay station and the terminals.

16. The base station according to Claim 15, wherein the base station transmission weight $W_{TX}$ is generated in such a manner that the transmitted streams from the base station are all separated and received by individual terminals.

17. The base station according to Claim 15 or 16, further comprising:

   an interference signal generating means for generating an interference signal based on the signal that the base station itself transmits in the first time frame; and,

an interference subtracting means for subtracting the generated interference signal from the signal received by the receiving means in the second time frame.

**18.** The base station according to any one of Claims 15 to 17, further comprising:

a reception weight multiplying means for multiplying the signal after subtraction of the interference signal by the interference subtracting means by a reception weight $W_{RX}$; and,

a means for detecting the transmitted signal from the terminals after multiplication of the reception weight $W_{RX}$.

**19.** The base station according to Claim 18, wherein the reception weight $W_{RX}$ is generated at least based on the channel between the base station and the relay station, or the channel between the relay station and the terminals.

**20.** A relay station relaying bidirectional communication between a base station having a plurality of transmitting and receiving antennas and a plurality of terminals using a same frequency, the relay station comprising:

a receiving means for receiving the signals transmitted from the base station and the terminals in the first time frame as received signals; and,

a transmitting means for transmitting a signal generated by multiplying the received signals in the first time frame by a relay station transmission weight $W_{RS}$ as the transmitted signals in a second time frame.

**21.** The relay station according to Claim 20, wherein the relay station transmission weight $W_{RS}$ is generated at least based on the channel between the relay station and the terminals.

**22.** The relay station according to Claim 21, wherein the relay station transmission weight $W_{RS}$ is generated in such a manner that the transmitted streams from the base station are all separated and received by individual terminals.

**23.** A terminal performing bidirectional communication with a base station having a plurality of transmitting and receiving antennas, via a relay station having a plurality of transmitting and receiving antennas using a same frequency as that of the base station and other terminals, comprising:

**24.** The terminal according to Claim 23, further comprising:

an interference signal generating means for generating an interference signal based on a signal that the terminal itself transmits in the first time frame; and,

an interference subtracting means for subtracting the generated interference signal from the received signal in the second time frame.

**Amended claims under Art. 19.1 PCT**

**1.** (Deleted)

**2.** (Deleted)

**3.** (Deleted)

**4.** (Deleted)

**5.** (Deleted)

**6.** (Deleted)

**7.** (Deleted)

**8.** (Deleted)

**9.** (Deleted)

**10.** (Deleted)

**11.** (Deleted)

**12.** (Deleted)

**13.** (Deleted)

**14.** (Deleted)

**15.** (Deleted)

**16.** (Deleted)

**17.** (Deleted)

**18.** (Deleted)

**19.** (Deleted)

**20.** (Deleted)

**21.** (Deleted)

**22.** (Deleted)

**23.** (Deleted)

**24.** (Deleted)

**25.** (Added) A radio communication system performing bidirectional communication between a base station having a plurality of transmitting and receiving antennas and a plurality of terminals using a same frequency via a relay station having a plurality of transmitting and receiving antennas, **characterized in that**
in a first time frame, the base station transmits signals addressed to the multiple terminals to the relay station and the multiple terminals each transmit a different signal from the others, addressed to the relay station, and,
the relay station,
receives the signals transmitted in the first time frame as received signals,
generates a relay station weight, at least based on the transmission channels between the relay station and th multiple terminals,
generates transmitted signals by multiplying the received signals by the relay station weight without demodulation, and transmits the transmitted signals to the base station and multiple terminals in a second frame.

**26.** (Added) The radio communication system according to Claim 25, wherein the signals to be transmitted from the base station to the multiple terminals in the first time frame are different signals from each other.

**27.** (Added) The radio communication system according to Claim 26, wherein the total number of the signals transmitted from the base station and the signals transmitted from the multiple terminals in the first time frame is greater than the number of antennas provided for the relay station.

**28.** (Added) The radio communication system according to any one of Claims 25 to 27, wherein the relay station weight is a weight such that the signals transmitted from the multiple terminals in the first time frame will not be received by the other terminals in the second time frame.

**29.** (Added) The radio communication system according to Claim 28, wherein a signal transmitted from the base station in the first time frame is a signal that is produced by multiplying a modulated signal by a base station weight that is generated at least based on the channel between the base station and the relay station or the channels between the relay station and terminals.

**30.** (Added) The radio communication system according to Claim 29, wherein the base station weight is a weight that is generated such that the signals transmitted from the base station to the multiple terminals in the first time frame will not be received by the terminals other than the addressed terminal in the second time frame.

**31.** (Added) The radio communication system according to any one of Claims 28 to 30, wherein the terminal having received a signal transmitted from the relay station in the second time frame generates an interference signal based on the signal which the terminal itself transmitted in the first time frame and subtracts the generated interference signal from the received signal to detect the signal transmitted from the base station in the first frame.

**32.** (Added) The radio communication system according to any one of Claims 28 to 31, wherein the base station having received signals transmitted from the relay station in the second time frame generates interference signals based on the signals which the base station itself transmitted in the first time frame and subtracts the generated interference signals from the received signals to detect the signals transmitted from the multiple terminals based on the signals after subtraction of the interference signal.

**33.** (Added) The radio communication system according to Claim 32, wherein the signals after subtraction of the interference signals are multiplied by the recepton weight generated at least based on the channel between the base station and the relay station or the channels between the relay station and terminals, to detect the signals transmitted from the multiple terminals based on the signals after multiplication of the reception weight.

**34.** (Added) A base station having a plurality of transmitting and receiving antennas and performing bidirectional communication with a plurality of terminals using a same frequency via a relay station having a plurality of transmitting and receiving antennas, comprising:

a means for generating a base station transmission weight at leased based on the channel between the base station and the relay station or the channels between the relay station and terminals;
a means for multiplying the signals addressed to the multiple terminals with the base station transmission weight;
a transmitting means for transmitting the signals multiplied with the base station tranmission weight to the relay station in the first time frame; and,
a receiving means for receiicing the signals transmitted from the relay station in the second time frame.

**35.** (Added) The base station according to Claim 34, wherein the signals addressed to the multiple terminals are different signals from each other, and the base station transmission weight is generated such that the different signals addressed to multiple terminals will not be received by the other terminals than the addressed terminal in the second time frame.

**36.** (Added) The base station according to Claim 34 or 35, further comprising:

an interference signal generating means for generating an interference signal based on the signal which the base station itself transmitted in the first time frame;
an interference subtracting means for subtracting the generated interference signal from the signal received by the receiving means in the second time frame; and,
a means for detecting the signals transmitted from the multiple terminals in the first time frame, based on the signals after subtraction of the interference signals.

**37.** (Added) The base station according to Claim 36, wherein the signals after subtraction of the interference signals are multiplied by the reception weight generated at least based on the channel between the base station and the relay station or the channels between the relay station and terminals, to detect the signals transmitted from the multiple terminals based on the signals after multiplication of the reception weight.

**38.** (Added) A relay station having a plurality of transmitting and receiving antennas and relaying bidirectional communication between a base station having a plurality of transmitting and receiving antennas and a plurality of terminals using the same frequency, comprising:

a receiving means for receiving the signals transmitted from the base station and the multiple terminal in the first time frame, as received signals;
a means for generating a relay station weight at leased based on the channels between the relay station and the terminals;

a means for multiplying the received signals with the relay station transmission weight, without performing demodulation of the received signals in the first time frame; and,

a transmitting means for transmitting the signals multiplied with the relay station weight as transmitted signals, in the second time frame.

**39.** (Added) The relay station according to Claim 38, wherein the relay station receives a greater number of signals than the number of antennas provided therefor, in the first time frame.

**40.** (Added) The relay station according to Claim 38 or 39, wherein the relay station weight is a weight produced such that the signals transmitted from the multiple terminals in the first time frame will not be received by the other terminals, in the second time frame

**41.** (Added) A terminal performing bidirectional communication with a base station having a plurality of transmitting and receiving antennas using the same frequency as that of the base station and the other terminals, via a relay station having a plurality of transmitting and receiving antennas, comprising:

a transmitting means for transmitting a signal addressed to the base station toward the relay station in a first time frame; and

a receiving means for receiving the signal transmitted from the relay station in a second time frame.

**42.** The terminal according to Claim 41, further comprising:

an interference signal generating means for generating an interference signal based on the signal which the terminal itself transmitted in the first time frame; and,

a subtracting means for subtracting the generated interference signal from the received signal in the second time frame.

FIG. 1

EP 2 413 517 A1

Frame 1 | Frame 2

**Base Station**

| Transmitted Signal $(W_{TX} \times u)$ | Reception $(W_{RX} \times H^T x_{RS})$ |

Channel H | Channel $H^T$

**Relay Station**

| Reception $(y_{RS})$ | $x_{RS} = W_{RS} \times y_{RS}$ |

Channel G | Channel $G^T$

**Terminal A**

| Transmitted Signal $(v_1)$ | Reception |

**Terminal B**

| Transmitted Signal $(v_2)$ | Reception |

Time

FIG. 2

FIG. 3

FIG. 4

EP 2 413 517 A1

FIG. 5

30

$v_1$
$v_2$

Terminal A

30

$v_3$
$v_4$

Terminal B

20

Relay Station

10

$\begin{pmatrix} u_1 \\ u_2 \end{pmatrix}$

$\begin{pmatrix} u_3 \\ u_4 \end{pmatrix}$

Base Station

To Terminal A →

To Terminal B →

FIG. 6

FIG. 7

FIG. 8

EP 2 413 517 A1

EP 2 413 517 A1

FIG. 9

FIG. 10

FIG. 11

Base Station 90

Relay Station 92

Terminal 94

Downlink

Uplink

| Base Station 90 → Relay Station 92 | Relay Station 92 → Terminal 94 | Terminal 94 → Relay Station 92 | Relay Station 92 → Base Station 90 |
|---|---|---|---|

Time

Frame

EP 2 413 517 A1

EP 2 413 517 A1

|  | Frame 1 | Frame 2 | Frame 3 |
|---|---|---|---|

**Base Station 90**

Transmitted
Signal u

Received Signal
u + v

**Relay Station 92**

Received
Signal u

Received
Signal v

Transmitted
Signal u + v

**Terminal 94**

Transmitted
Signal v

Received
Signal u + v

Time

FIG. 12

EP 2 413 517 A1

Frame 1 | Frame 2

Base Station 90

$$\text{Transmitted Signal } u = \begin{pmatrix} u_1 \\ u_2 \end{pmatrix}$$

Received Signal

$$= H^T W_{RS} ( Hu + Gv )$$

Channel H

Channel $H^T$

Relay Station 92

Received Signal $= Hu + Gv$

Transmitted Signal

$$= W_{RS} ( Hu + Gv )$$

Channel G

Channel $G^T$

Terminal 94

$$\text{Transmitted Signal } v = \begin{pmatrix} v_1 \\ v_2 \end{pmatrix}$$

Received Signal

$$= G^T W_{RS} ( Hu + Gv )$$

Time

FIG. 13

FIG. 14

<table>
<tr><td colspan="2"><b>INTERNATIONAL SEARCH REPORT</b></td><td>International application No.<br>PCT/JP2010/054303</td></tr>
</table>

| A. CLASSIFICATION OF SUBJECT MATTER |
|---|
| *H04B7/15*(2006.01)i, *H04B7/04*(2006.01)i, *H04J99/00*(2009.01)i, *H04W16/26*(2009.01)i, *H04W16/28*(2009.01)i |

According to International Patent Classification (IPC) or to both national classification and IPC

| B. FIELDS SEARCHED |
|---|
| Minimum documentation searched (classification system followed by classification symbols)<br>H04B7/15, H04B7/04, H04J99/00, H04W16/26, H04W16/28 |

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)
IEEE Xplore

**C. DOCUMENTS CONSIDERED TO BE RELEVANT**

| Category* | Citation of document, with indication, where appropriate, of the relevant passages | Relevant to claim No. |
|---|---|---|
| X<br><br>A | Celal Esli, et.al., Multiuser MIMO two-way relaying for cellular communications, IEEE Personal, Indoor and Mobile Radio Communications, IEEE, 2008.09.15, pages.1-6 | 1,11-13,20, 23<br>2-10,14-19, 21-22,24 |
| A | Namyoon Lee, et.al, Linear Precoder and Decoder Design for Two-Way AF MIMO Relaying System, IEEE Vehicular Technology Conference, 2008.05. 11, pages.1221-1225 | 1-24 |
| A | Lingfan Weng, et.al., Multi-User MIMO Relay System with Self-Interference Cancellation, IEEE Wireless Communications and Networking Conference, 2007.03.11, pages.959-963 | 1-24 |

☐ Further documents are listed in the continuation of Box C.  ☐ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination |
| "O" | document referring to an oral disclosure, use, exhibition or other means | being obvious to a person skilled in the art |
| "P" | document published prior to the international filing date but later than the priority date claimed | "&" document member of the same patent family |

| Date of the actual completion of the international search<br>19 May, 2010 (19.05.10) | Date of mailing of the international search report<br>01 June, 2010 (01.06.10) |
|---|---|
| Name and mailing address of the ISA/<br>Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **N. Lee et al.** Linear Precoder and Decoder Design for Two-Way AF MIMO Relaying System. VTC Spring, May 2008

- **L. Weng et al.** MU-MIMO Relaying System with Self-interference Cancellation. *WCNC,* March 2007